# EUROPEAN PATENT APPLICATION

(11) **EP 4 310 549 A1**
(43) Date of publication of application: **24.01.2024**
(21) Application number: 21931697.3
(22) Date of filing: 11.11.2021
(51) Int. Cl.: G01S 17/86

(54) **SENSING SYSTEM**

(30) Priority: 17.03.2021 US 202163162210 P
(71) Applicant: Sony Semiconductor Solutions Corporation, Atsugi-shi, Kanagawa 243-0014 (JP)
(72) Inventor: KITANO, Kazutoshi, Atsugi-shi, Kanagawa 243-0014 (JP); KAWAMURA, Yuusuke, Atsugi-shi, Kanagawa 243-0014 (JP); TAKAHASHI, Kousuke, Atsugi-shi, Kanagawa 243-0014 (JP); KUBOTA, Takeshi, Atsugi-shi, Kanagawa 243-0014 (JP); KITANO, Masaki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2021/041642
(87) International publication number: WO 2022/195954

(57) **Abstract**

A sensing system (1) according to an embodiment includes: a light detection and ranging device (11) that outputs a speed image based on speed point cloud information based on a reception signal reflected and received by a subject as information of the subject, the light detection and ranging device using a frequency modulated continuous wave; and a solid-state imaging device (12) that outputs a captured image obtained by capturing an image of the subject as information of the subject, and the light detection and ranging device and the solid-state imaging device are arranged to acquire information from the same side of the subject.

## Description

### Field

The present disclosure relates to a sensing system.

### Background

Conventionally, a camera has been widely used for the purpose of measuring or monitoring an action or a movement of a person or other moving bodies existing in a target space (for example, Patent Literature 1). The camera can acquire a captured image obtained by capturing an image of an object included in its field of view (angle of view). The object included in the captured image can be detected and recognized by performing calculation processing on the captured image acquired by the camera.

Due to optical characteristics of the camera, the number of pixels of a partial image corresponding to a target object in the captured image decreases as a distance to the target object increases, and the accuracy of the detection and recognition of the target object based on the captured image of the camera decreases. Such a decrease in the accuracy depending on the distance to the target object can be mitigated by using a camera that uses a high-resolution image sensor.

Meanwhile, there is known an optical distance measuring device called laser imaging detection and ranging (LiDAR) that measures a distance to a target object on the basis of a light reception signal obtained by receiving reflected light of laser light applied to the target object. In the LiDAR, a scanner, a focal plane array detector, and the like are used together to execute the distance measurement for each angle in a field-of-view range, and data called a point cloud is output, for example, at a certain frame rate on the basis of information on the angle and the distance. When calculation processing is performed on such point cloud data, it is possible to detect and recognize accurate position, posture, and the like of the target object (for example, Patent Literature 2 and Patent Literature 3) .

### Citation List

### Patent Literature

Patent Literature 1: JP 2019-114280 A
Patent Literature 2: JP 2019-101000 A
Patent Literature 3: JP 2003-272061 A

### Summary

### Technical Problem

In a case where the high-resolution image sensor is used in the detection and recognition processing using the camera, a load of the calculation processing on the captured image increases. In particular, in advanced detection processing and recognition processing in which processing is repeated for a whole captured image for the purpose of measurement and monitoring for the entire field of view, processing time, calculation cost, and power consumption increase.

Furthermore, luminance of a surface of a target object varies depending on external light conditions such as sunlight and illumination light, and thus, the accuracy of the detection and recognition processing of the target object using the camera depends on external light. For example, in detection and recognition processing of a target object using a camera under a low-illuminance environment, there is a possibility that luminance of a captured image decreases and accuracy of detection and recognition for the target object included in the captured image decreases.

Moreover, due to the optical characteristics, the camera captures an image of a minute shielding substance such as a raindrop or dust present between the camera and the target object together with the target object at the time of capturing the image of the target object. Therefore, an image region corresponding to the target object in the captured image captured by the camera is partial with respect to an original image of the target object, and there is a possibility that the accuracy of detection and recognition for the target object included in the captured image decreases.

On the other hand, in the LiDAR, a measurement result is hardly affected by external light due to its operation principle, and thus, it is possible to stably detect and recognize the target object even under the low-illuminance environment, for example. In the LiDAR, however, specifications are in a trade-off relationship with each other due to its operation principle, and thus, it is necessary to keep the resolution low, for example, in order to secure a certain frame rate or more. Therefore, in the LiDAR, the number of points in a partial point cloud corresponding to a target object decreases as a distance to the target object increases, and there is a possibility that the accuracy of detection and recognition for the target object decreases.

An object of the present disclosure is to provide a sensing system capable of stably performing detection and recognition of a target object under various environments.

### Solution to Problem

For solving the problem described above, a sensing system according to one aspect of the present disclosure has a light detection and ranging device that outputs a speed image based on speed point cloud information based on a reception signal reflected and received by a subject as information of the subject, the light detection and ranging device using a frequency modulated continuous wave; and a solid-state imaging device that outputs a captured image obtained by capturing an image of the subject as information of the subject, wherein the light detection and ranging device and the solid-state imaging device are arranged to acquire information from an identical side of the subject.

### Brief Description of Drawings

FIG. 1 is a block diagram illustrating a configuration of an example of a sensing system applicable to each embodiment of the present disclosure.
FIG. 2 is a block diagram illustrating a configuration of an example of a light detection and ranging unit applicable to each embodiment of the present disclosure.
FIG. 3 is a schematic diagram schematically illustrating scanning of transmission light by a scanning unit.
FIG. 4 is a block diagram illustrating a configuration of an example of a sensing system according to a first embodiment.
FIG. 5 is a view schematically illustrating an example of a distance image.
FIG. 6 is a view schematically illustrating an example of a speed image.
FIG. 7 is a view schematically illustrating an example of a composite image.
FIG. 8 is a schematic diagram illustrating an arrangement example of a sensor unit according to the first embodiment.
FIG. 9 is a flowchart illustrating an example of processing by the sensing system according to the first embodiment.
FIG. 10 is a view schematically illustrating an example of a speed point cloud.
FIG. 11 is a view schematically illustrating an example of 3D region information extracted from the speed point cloud.
FIG. 12 is a schematic view illustrating the example of the 3D region information in more detail.
FIG. 13 is a view schematically illustrating an example of a captured image.
FIG. 14 is a view schematically illustrating a state of acquiring 3D region information from a composite image frame.
FIG. 15 is a view schematically illustrating an example of a partial image extracted on the basis of the 3D region information.
FIG. 16 is a schematic diagram illustrating an arrangement example of a plurality of sensor units 10 according to a modification of the first embodiment.
FIG. 17 is a block diagram illustrating a configuration of an example of a sensing system according to the modification of the first embodiment.
FIG. 18 is a schematic diagram illustrating an arrangement example of a sensor unit according to a second embodiment.
FIG. 19 is a block diagram illustrating a configuration of an example of a sensing system according to the second embodiment.
FIG. 20 is a flowchart of an example illustrating processing by a signal processing unit according to the second embodiment.
FIG. 21 is a schematic diagram for describing a process of generating ROI scanning control information according to the second embodiment.
FIG. 22 is a schematic diagram for describing ROI scanning according to the second embodiment.
FIG. 23 is a schematic diagram for describing the ROI scanning according to the second embodiment.
FIG. 24 is a schematic diagram illustrating ROI scanning in a case where a plurality of sensor units is arranged according to a modification of the second embodiment.
FIG. 25 is a block diagram illustrating a configuration of an example of a sensing system according to the modification of the second embodiment.
FIG. 26 is a diagram schematically illustrating a configuration of a people flow analysis system according to a third embodiment.
FIG. 27 is a block diagram illustrating a configuration of an example of the people flow analysis system according to the third embodiment in more detail.
FIG. 28 is a diagram schematically illustrating an example of people flow displayed on a display device by an information presentation device.
FIG. 29 is a flowchart illustrating an example of processing by the people flow analysis system according to the third embodiment.
FIG. 30A is a diagram schematically illustrating a configuration of an abnormality detection system according to a fourth embodiment.
FIG. 30B is a diagram schematically illustrating the configuration of the abnormality detection system according to the fourth embodiment.
FIG. 31 is a block diagram illustrating a configuration of an example of the abnormality detection system according to the fourth embodiment in more detail.
FIG. 32 is a flowchart illustrating an example of processing by the abnormality detection system according to the fourth embodiment.
FIG. 33 is a flowchart illustrating an example of processing by the abnormality detection system according to the fourth embodiment. Description of Embodiments

Hereinafter, embodiments of the present disclosure will be described in detail with reference to the drawings. Note that the same portions are denoted by the same reference signs in the following embodiments, and a repetitive description thereof will be omitted.

Hereinafter, the embodiments of the present disclosure will be described in the following order.
1. Regarding Existing Technology
   1-1. Method Using Camera
   1-2. Method Using LiDAR
   1-3. Regarding FMCW-LiDAR
2. Outline of Present Disclosure
3. First Embodiment
   3-1. Modification of First Embodiment
4. Second Embodiment
   4-1. Modification of Second Embodiment
5. Third Embodiment
6. Fourth Embodiment

### [1. Regarding Existing Technology]

The present disclosure relates to a technology suitable for use in detecting an object, in particular, detecting and tracking a moving object. Prior to describing each embodiment of the present disclosure, an existing technology related to the technology of the present disclosure will be schematically described in order to facilitate understanding.

### (1-1. Method Using Camera)

As one of methods for detecting and tracking a moving object, a method using a camera is conventionally known (for example, Patent Literature 1). The camera can acquire a captured image obtained by capturing an image of an object included in its angle of view. When calculation processing is performed on the captured image acquired by the camera, a target object can be detected and recognized from the captured object. This processing is performed on, for example, a plurality of the captured images captured at different times to track the target object recognized in common in the respective captured images.

Hereinafter, the angle of view of the camera is appropriately referred to as a field of view assuming that an image acquired through a lens of the camera corresponds to an image acquired by a human eye.

Due to optical characteristics of the camera, the number of pixels of a partial image corresponding to a target object in the captured image decreases as a distance to the target object increases, and the accuracy of the detection and recognition of the target object based on the captured image of the camera decreases. Such a decrease in the accuracy depending on the distance to the target object can be mitigated by using a camera that uses a high-resolution image sensor.

Meanwhile, in a case where a high-resolution image sensor is used in detection and recognition processing using the camera, a load of the calculation processing on the captured image increases. In particular, in advanced detection processing and recognition processing in which processing is repeated for a whole captured image for the purpose of measurement and monitoring for the entire angle of view, processing time, calculation cost, and power consumption increase.

Furthermore, luminance of the target object varies depending on external light conditions such as sunlight and illumination light, and thus, the accuracy of the detection and recognition processing of the target object using the camera depends on external light. For example, in detection and recognition processing of a target object using a camera under a low-illuminance environment, there is a possibility that luminance of a captured image decreases and accuracy of detection and recognition for the target object included in the captured image decreases.

Moreover, due to the optical characteristics, the camera captures an image of a minute shielding substance such as a raindrop or dust present between the camera and the target object simultaneously with the target object at the time of capturing the image of the target object. Therefore, an image region corresponding to the target object in the captured image captured by the camera is partial with respect to an original image of the target object, and there is a possibility that the accuracy of detection and recognition for the target object included in the captured image decreases.

### (1-2. Method Using LiDAR)

As another method for detecting and tracking a moving object, a method using laser imaging detection and ranging (LiDAR) is known. The LiDAR is a light detection and ranging device that measures a distance to a target object on the basis of a light reception signal obtained by receiving reflected light of laser light applied to the target object. In the LiDAR, a scanner that performs scanning of the laser light, a focal plane array detector as a light receiving unit, and the like are used together. In the LiDAR, the distance measurement is performed for each certain angle in a scan range of the laser light, and data called a point cloud is output on the basis of information on the angle and the distance.

The point cloud is obtained by sampling a position and a spatial structure of the object included in the scan range of the laser light, and is generally output every frame time of a certain cycle. When calculation processing is performed on such point cloud data, it is possible to detect and recognize accurate position, posture, and the like of the target object (for example, Patent Literature 2 and Patent Literature 3).

Hereinafter, assuming that a scan range viewed from the light receiving unit in the LiDAR corresponds to a range recognizable by a human eye, and the scan range is appropriately referred to as a field of view or a field-of-view range.

In the LiDAR, a measurement result is hardly affected by external light due to its operation principle, and thus, it is possible to stably detect and recognize the target object even under the low-illuminance environment, for example. Various light detection and ranging methods using the LiDAR have been conventionally proposed. For long-distance measurement applications, a pulse time-of-flight (ToF) method combining pulse modulation and direct detection has become widespread. Hereinafter, a light detection and ranging method by the pulse ToF using the LiDAR is appropriately referred to as direct ToF (dToF)-LiDAR.

In the LiDAR, specifications are in a trade-off relationship with each other due to its operation principle, and thus, it is necessary to keep the resolution low, for example, in order to secure a certain frame rate or more. Therefore, in the LiDAR, the number of points in a partial point cloud corresponding to a target object decreases as a distance to the target object increases, and there is a possibility that the accuracy of detection and recognition for the target object decreases. Furthermore, in general, the LiDAR can measure a surface reflectance of an object, but does not measure a color of the object. Therefore, it can be said that the LiDAR is not suitable for recognition applications such as advanced object identification, classification, and the like performed using the camera.

Furthermore, the dToF-LiDAR is a method of receiving energy of light and performing distance measurement, and thus, it is difficult to distinguish whether reception light is reflected light of laser light emitted by the LiDAR or light of another light source. Therefore, in the dToF-LiDAR, there is a possibility that ambient light affects the reception light in an environment where a high-illuminance light source such as the sun exists, which leads to an increase in noise and occurrence of interference.

Moreover, in a case where a minute object is present in a space of the scan range, the dToF-LiDAR receives reflected light from the minute object simultaneously with reflected light from a target object. Therefore, in a case where there are a certain number of the minute objects having a certain size or more, a plurality of pulses including a pulse caused by the reflected light from the minute object is detected in a reception signal, and it is difficult to distinguish between a pulse caused by the reflected light from the target object and the pulse caused by the reflected light from the minute object. Therefore, in a point cloud output from the dToF-LiDAR, the number of points corresponding to the target object decreases or disappears, but detection points caused by the minute objects appear in a scattered manner in the space of the scan range.

Furthermore, in the dToF-LiDAR, the point cloud is generally output every certain cycle (frame) as described above. When the point clouds of the respective frames are compared, it is possible to estimate the movement (moving speed, direction, and the like) of an object detected in the point cloud.

However, in a case where a target object is not a rigid body but changes in shape (such as a human), it is difficult to associate point clouds between frames. In particular, in a case where a plurality of target objects is present at the same time in the space of the scan range and is moving differently, it is extremely difficult to associate point clouds between frames. Furthermore, in a case where a target object is present far away, a case where a shape is complicated, or a case where a plurality of target objects is moving in a complicated manner at the same time, it is also difficult to accurately detect the movement of the target object.

### (1-3. Regarding FMCW-LiDAR)

Here, frequency modulated continuous wave (FMCW)-LiDAR, which is one of the light detection and ranging methods using the LiDAR, will be described. In the FMCW-LiDAR, as laser light to be emitted, chirp light in which a frequency of a pulse is linearly varied, for example, according to the lapse of time is used. In the FMCW-LiDAR, distance measurement is performed by coherent detection with respect to a reception signal obtained by combining the laser light emitted as the chirp light and reflected light of the emitted laser light.

In the FMCW-LiDAR, a speed can be measured simultaneously with the distance measurement by utilizing the Doppler effect. Therefore, when the FMCW-LiDAR is used, it is easy to quickly grasp a position of an object having a speed, such as a person or another moving object. Furthermore, since the coherent detection is less likely to receive interference from other light sources, crosstalk can be avoided, and further, influence of noise due to a high-illuminance light source such as sunlight is little. Therefore, the measurement by the FMCW-LiDAR is resistant to environmental changes, and it is possible to stably measure the target object even in a low-illuminance environment.

In the present disclosure, the camera and the FMCW-LiDAR are used in cooperation to detect and recognize a target object. This makes it possible to achieve stable, high-speed, and high-accuracy detection and recognition in various environments.

### [2. Outline of Present Disclosure]

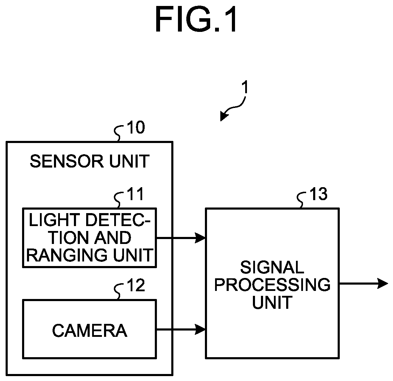

Next, the present disclosure will be schematically described. FIG. 1 is a block diagram illustrating a configuration of an example of a sensing system 1 applicable to each embodiment of the present disclosure. In FIG. 1, the sensing system 1 includes a sensor unit 10 and a signal processing unit 13 that performs predetermined signal processing on an output signal output from the sensor unit 10. The output of the signal processing unit 13 is supplied to, for example, an information processing device (not illustrated) in which a predetermined application program is executed.

The sensor unit 10 includes a light detection and ranging unit 11 and a camera 12. FMCW-LiDAR that performs distance measurement using frequency modulated continuous wave laser light is applied to the light detection and ranging unit 11. Detection and distance measurement results obtained by the light detection and ranging unit 11 are supplied to the signal processing unit 13 as point cloud information having three-dimensional spatial information.

The camera 12 captures an image of light in a visible light wavelength region, for example, and outputs a captured image based on two-dimensional information including information on each color of red (R), green (G), and blue (B). The captured image output from the camera 12 is supplied to the signal processing unit 13.

In the sensor unit 10, the light detection and ranging unit 11 and the camera 12 are arranged to acquire information from the same side of a subject to be measured. For example, it is conceivable that an angle range of a light transmission direction by the light detection and ranging unit 11 and an angle of view by the camera 12 face substantially the same direction, and the light detection and ranging unit 11 and the camera 12 are arranged to be close to each other.

The signal processing unit 13 executes signal processing on the detection and distance measurement results supplied from the light detection and ranging unit 11 and the captured image supplied from the camera 12 to output information including attribute information and region information regarding the subject.

Note that the sensing system 1 that includes one sensor unit 10 and one signal processing unit 13 corresponding to the sensor unit 10 is illustrated in the example of FIG. 1, but this is not limited to this example. For example, the sensing system 1 may include a plurality of the sensor units 10 for one signal processing unit 13.

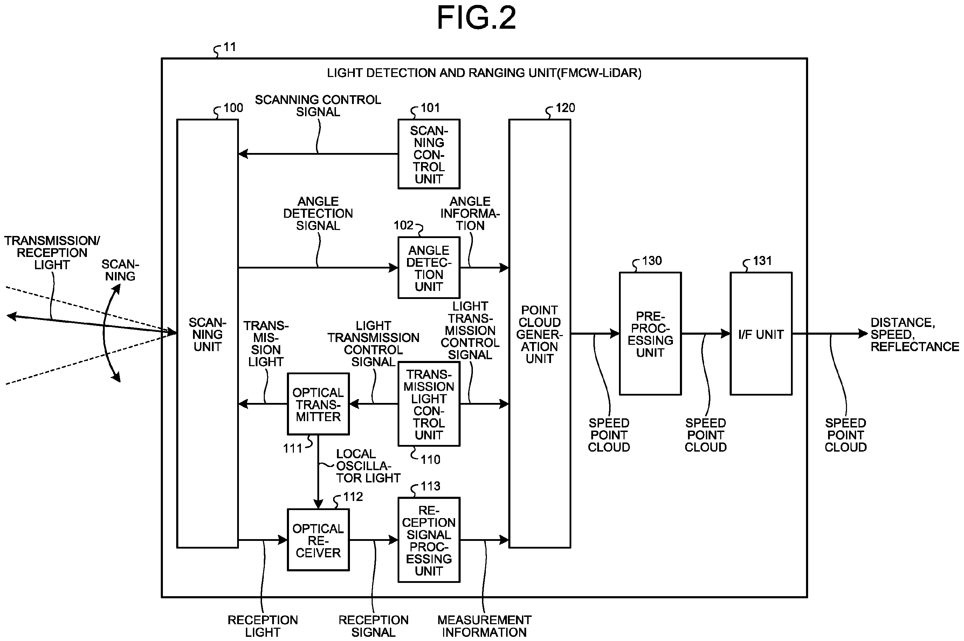

FIG. 2 is a block diagram illustrating a configuration of an example of the light detection and ranging unit 11 applicable to each embodiment of the present disclosure. In FIG. 2, the light detection and ranging unit 11 includes a scanning unit 100, a scanning control unit 101, and an angle detection unit 102. The light detection and ranging unit 11 further includes a transmission light control unit 110, an optical transmitter 111, an optical receiver 112, and a reception signal processing unit 113. Furthermore, the light detection and ranging unit 11 includes a point cloud generation unit 120, a pre-processing unit 130, and an interface (I/F) unit 131.

The optical transmitter 111 includes, for example, a light source such as a laser diode for emitting laser light as transmission light, an optical system for emitting light emitted by the light source, and a laser output modulation device that drives the light source. The optical transmitter 111 causes the light source to emit light according to a light transmission control signal supplied from the transmission light control unit 110 to be described later, and emits the transmission light using chirp light whose frequency linearly varies within a predetermined frequency range as time elapses. The transmission light is transmitted to the scanning unit 100 and is transmitted to the optical receiver 112 as local oscillator light.

The transmission light control unit 110 generates a signal whose frequency linearly varies (for example, increases) within a predetermined frequency range as time elapses. Such a signal whose frequency linearly varies within the predetermined frequency range as time elapses is referred to as a chirp signal. The transmission light control unit 110 is a modulation motive timing signal input to the laser output modulation device included in the optical transmitter 111 on the basis of the chirp signal. The light transmission control signal is generated. The transmission light control unit 110 supplies the generated light transmission control signal to the optical transmitter 111 and the point cloud generation unit 120.

The optical receiver 112 includes, for example, a light receiving unit that receives (accepts) reception light from the scanning unit 100, and a drive circuit that drives the light receiving unit. As the light receiving unit, for example, a pixel array in which light receiving elements such as photodiodes respectively constituting pixels are arranged in a two-dimensional lattice pattern can be applied. The optical receiver 112 further includes a combining unit that combines the reception light received from the scanning unit and the local oscillator light transmitted from the optical transmitter 111. If the reception light is reflected light from a subject of the transmission light, the reception light becomes a signal delayed depending on a distance to the subject with respect to the local oscillator light, and a composite signal obtained by combining the reception light and the local oscillator light becomes a signal (beat signal) of a certain frequency. The optical receiver 112 supplies this signal to the reception signal processing unit 113 as a reception signal.

The reception signal processing unit 113 performs signal processing such as fast Fourier transform on the reception signal supplied from the optical receiver 112. Through this signal processing, the reception signal processing unit 113 obtains a distance to the subject and a speed indicating a speed of the subject, and generates measurement information including distance information and speed information indicating the distance and the speed, respectively. The reception signal processing unit 113 may further obtain reflectance information indicating a reflectance of the subject on the basis of the reception signal and include the reflectance information in the measurement information. The reception signal processing unit 113 supplies the generated measurement information to the point cloud generation unit 120.

The scanning unit 100 transmits the transmission light transmitted from the optical transmitter 111 at an angle according to a scanning control signal supplied from the scanning control unit 101, and receives light incident from the angle as the reception light. In the scanning unit 100, for example, a two-axis mirror scanning device can be applied as a scanning mechanism of the transmission light. In this case, the scanning control signal is, for example, a drive voltage signal applied to each axis of the two-axis mirror scanning device.

The scanning control unit 101 generates a scanning control signal for changing a transmission/reception angle by the scanning unit 100 within a predetermined angle range, and supplies the scanning control signal to the scanning unit 100. The scanning unit 100 can execute scanning in a certain range by the transmission light according to the supplied scanning control signal.

The scanning unit 100 includes a sensor that detects an emission angle of the transmission light to be emitted, and outputs an angle detection signal indicating the emission angle of the transmission light detected by the sensor. The angle detection unit 102 obtains the transmission/reception angle on the basis of the angle detection signal output from the scanning unit 100, and generates angle information indicating the obtained angle. The angle detection unit 102 supplies the generated angle information to the point cloud generation unit 120.

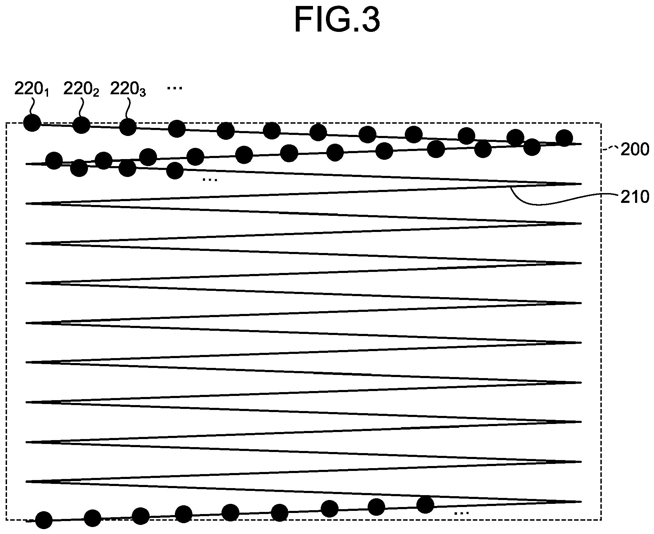

FIG. 3 is a schematic diagram schematically illustrating scanning of transmission light by the scanning unit 100. The scanning unit 100 performs scanning according to a predetermined number of scan lines 210 within a predetermined angle range 200. The scan line 210 corresponds to one trajectory obtained by scanning between a left edge and a right edge of the angle range 200. The scanning unit 100 performs scanning between an upper edge and a lower edge of the angle range 200 according to the scan lines 210 in response to the scanning control signal.

At this time, according to the scanning control signal, the scanning unit 100 sequentially and discretely changes an emission point of the chirp light along the scan line 210 at a certain point rate in the order of, for example, points 220₁, 220₂, 220₃, and so on. Therefore, the points 220₁, 220₂, 220₃, and so on are not necessarily arrayed in a lattice shape in the angle range 200. Note that the optical transmitter 111 may emit the chirp light to one emission point once or a plurality of times according to the light transmission control signal supplied from the transmission light control unit 110.

Returning to the description of FIG. 2, the point cloud generation unit 120 generates the point cloud information on the basis of the angle information supplied from the angle detection unit 102, the light transmission control signal supplied from the transmission light control unit 110, and the measurement information supplied from the reception signal processing unit 113. More specifically, the point cloud generation unit 120 specifies one point in the space by an angle and a distance on the basis of the angle information and the distance information included in the measurement information. The point cloud generation unit 120 acquires a point cloud as a set of the specified points under a predetermined condition. The point cloud generation unit 120 obtains a speed point cloud obtained by adding a speed of each of the specified points to the point cloud on the basis of the speed information included in the measurement information.

The point cloud generation unit 120 supplies the obtained speed point cloud to the pre-processing unit 130. The pre-processing unit 130 performs predetermined signal processing such as format conversion on the supplied speed point cloud. The speed point cloud subjected to the signal processing by the pre-processing unit 130 is output to the outside of the light detection and ranging unit 11 via the I/F unit 131.

Furthermore, the point cloud generation unit 120 may output each piece of information (the distance information, the speed information, the reflectance information, and the like) included in the measurement information supplied from the reception signal processing unit 113 to the outside via the pre-processing unit 130 and the I/F unit 131 although not illustrated in FIG. 2.

### [3. First Embodiment]

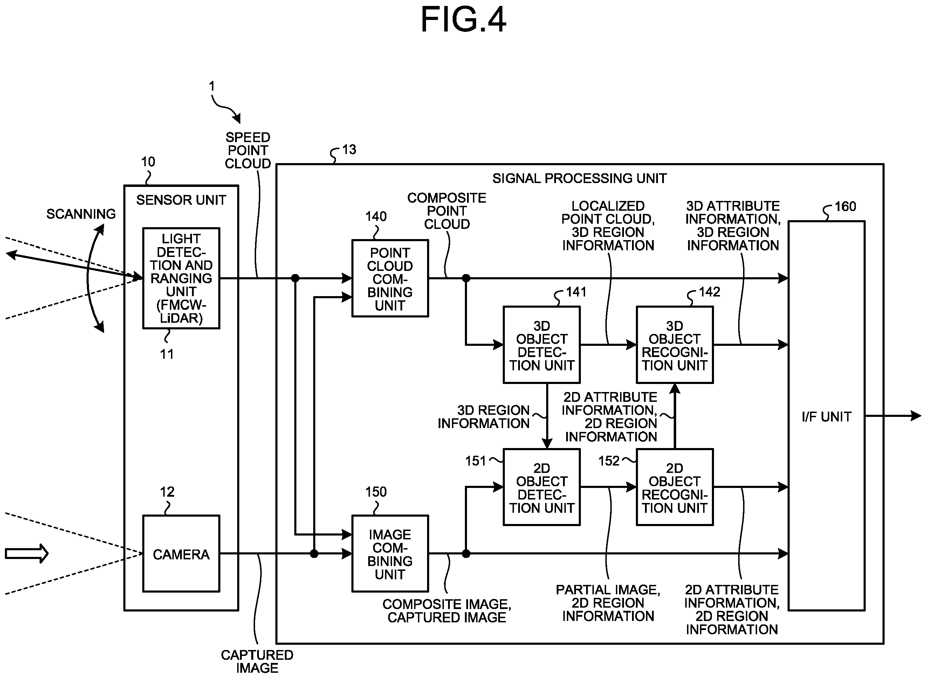

Next, a first embodiment of the present disclosure will be described. FIG. 4 is a block diagram illustrating a configuration of an example of the sensing system 1 according to the first embodiment.

In FIG. 4, the sensing system 1 includes one sensor unit 10 and one signal processing unit 13. The signal processing unit 13 includes a point cloud combining unit 140, a 3D (three dimensions) object detection unit 141, a 3D object recognition unit 142, an image combining unit 150, a 2D (two dimensions) object detection unit 151, a 2D object recognition unit 152, and an I/F unit 160.

The point cloud combining unit 140, the 3D object detection unit 141, the 3D object recognition unit 142, the image combining unit 150, the 2D object detection unit 151, the 2D object recognition unit 152, and the I/F unit 160 can be configured by executing an information processing program according to the present disclosure on a processor such as a central processing unit (CPU). Without being limited thereto, a part or all of the point cloud combining unit 140, the 3D object detection unit 141, the 3D object recognition unit 142, the image combining unit 150, the 2D object detection unit 151, the 2D object recognition unit 152, and the I/F unit 160 may be configured by hardware circuits that operate in cooperation with each other.

In FIG. 4, the point cloud combining unit 140, the 3D object detection unit 141, and the 3D object recognition unit 142 perform processing related to the point cloud information. Furthermore, the image combining unit 150, the 2D object detection unit 151, and the 2D object recognition unit 152 perform processing related to a captured image.

The point cloud combining unit 140 acquires a speed point cloud from the light detection and ranging unit 11 and acquires the captured image from the camera 12. The point cloud combining unit 140 combines color information and other information on the basis of the speed point cloud and the captured image to generate a composite point cloud that is a point cloud obtained by adding new information and the like to each of measurement points of the speed point cloud.

More specifically, the point cloud combining unit 140 refers a pixel of the captured image corresponding to an angular coordinate of each of the measurement points in the speed point cloud by coordinate system transformation, and acquires color information representing the point for each of the measurement points. The measurement point corresponds to a point at which reflected light is received with respect to each of the points 220₁, 220₂, 220₃, and so on described with reference to FIG. 3. The point cloud combining unit 140 adds the acquired color information of each of the measurement points to measurement information of each of the measurement points. The point cloud combining unit 140 outputs the composite point cloud in which each of the measurement points has speed information and the color information.

Note that the coordinate system transformation between the speed point cloud and the captured image is preferably performed, for example, after calibration processing based on a positional relationship between the light detection and ranging unit 11 and the camera 12 is performed in advance and a result of the calibration is reflected on the angular coordinates of the speed point cloud and the coordinates of the pixels in the captured image.

The 3D object detection unit 141 acquires the composite point cloud output from the point cloud combining unit 140, and detects measurement points indicating a 3D object included in the acquired composite point cloud. Note that, hereinafter, an expression such as "detecting measurement points indicating a 3D object included in a composite point cloud" will be described as "detecting a 3D object included in a composite point cloud" or the like in order to avoid complexity.

The 3D object detection unit 141 extracts a point cloud of the measurement points indicating the 3D object detected from the composite point cloud as a localized point cloud.

More specifically, in order to discriminate between a static object and a dynamic object included in the composite point cloud, the 3D object detection unit 141 extracts points each having a certain absolute speed value or more from the speed point cloud in which the color information in the composite point cloud is ignored. The 3D object detection unit 141 extracts a set of speed point clouds (referred to as a localized speed point cloud) localized in a certain spatial range (corresponding to a size of a target object) from a speed point cloud of the extracted points. The 3D object detection unit 141 may extract a plurality of the localized speed point clouds from the composite point cloud.

Furthermore, the 3D object detection unit 141 generates region information that is information indicating a range in which the target object, that is, the localized point cloud is present in a point cloud representing the entire target space. More specifically, in a case where the number of points included in each of the localized speed point clouds is a first constant or more, the 3D object detection unit 141 estimates a position, a size, and a posture of, for example, the minimum region including the localized speed point cloud, and generates region information of the estimated region. Hereinafter, the region information regarding the point cloud is referred to as 3D region information. The 3D region information is expressed by, for example, a rectangular parallelepiped such as a 3D bounding box.

The 3D object detection unit 141 outputs a localized point cloud and 3D region information corresponding to the localized point cloud.

The 3D object recognition unit 142 acquires the localized point cloud and the 3D region information output from the 3D object detection unit 141. Furthermore, the 3D object recognition unit 142 acquires region information and attribute information output from the 2D object recognition unit 152 to be described later. The 3D object recognition unit 142 performs object recognition on the localized point cloud on the basis of the acquired localized point cloud and 3D region information and the region information and attribute information acquired from the 2D object recognition unit 152.

In a case where the number of points included in the localized speed point cloud is a second constant or more, which is the number of points that can be used to recognize the target object, the 3D object recognition unit 142 performs point cloud recognition processing on the localized speed point cloud on the basis of 3D point cloud region information. The 3D object recognition unit 142 estimates attribute information related to the recognized object by the point cloud recognition processing. Hereinafter, the attribute information based on the point cloud is referred to as 3D attribute information.

In a case where a certainty factor of the estimated 3D attribute information is a certain value or more, that is, the recognition processing has been performed effectively, the 3D object recognition unit 142 outputs time information indicating the time at which measurement has been performed, the 3D region information, and the 3D attribute information in an integrated manner.

Note that the attribute information is information indicating attributes of the target object such as a type and a specific classification of the target object to which a unit belongs as a result of the recognition processing, the unit being a point of the point cloud and a pixel of the image. When the target object is a person, for example, the 3D attribute information can be expressed as a unique numerical value being assigned to each point of the point cloud and belonging to the person.

The image combining unit 150 acquires the speed point cloud from the light detection and ranging unit 11 and acquires the captured image from the camera 12. The image combining unit 150 generates a distance image and a speed image on the basis of the speed point cloud and the captured image.

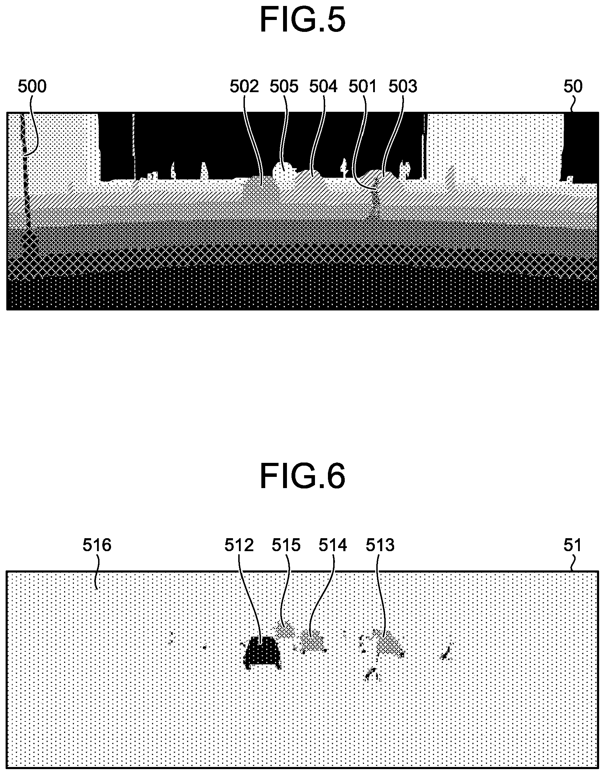

FIG. 5 is a view schematically illustrating an example of a distance image 50. The distance image 50 is an image including information indicating distances from a measurement point. In the example of FIG. 5, the distance image 50 indicates the distances in stages by shading. FIG. 5 illustrates that the distance from the measurement point increases in the order of objects 500, 501, and 502. Furthermore, it is illustrated that objects 503 and 504 have a longer distance from the measurement point than the object 502 and are at the same distance. It is illustrated that an object 505 has a longer distance from the measurement point than the objects 503 and 504. Note that a region filled in black in the distance image 50 indicates an infinite distance or a region in which distance measurement is impossible.

FIG. 6 is a view schematically illustrating an example of a speed image 51. In FIG. 6, objects 512 to 515 included in the speed image 51 respectively correspond to the objects 502 to 505 included in the distance image 50 illustrated in FIG. 5.

The speed image 51 is an image obtained using the Doppler effect, and includes, for example, information indicating a speed with respect to the measurement point and a direction of the speed. In the example of FIG. 6, in the speed image 51, the objects 513, 514, and 515 moving so as to approach the measurement point are displayed in a first color, and the object 512 moving so as to move away from the measurement point is displayed in a second color. Furthermore, in FIG. 6, a region 516 in which the speed with respect to the measurement point is [0] is displayed in a third color. Note that the moving speed of the object may be represented by densities of the first color and the second color although not illustrated in FIG. 6.

The image combining unit 150 combines the distance image 50, the speed image 51, and the captured image while matching coordinates by coordinate system transformation, and generates a composite image based on an RGB image having color information on each color of red (R), green (G), and blue (B). The composite image generated here is an image in which each pixel has color, distance, and speed information. Note that the distance image 50 and the speed image 51 have lower resolutions than the captured image output from the camera 12. Therefore, the image combining unit 150 may match the resolution of the distance image 50 and the speed image 51 with that of the captured image by processing such as upscaling.

The image combining unit 150 outputs the captured image and the generated composite image. Note that the composite image refers to an image in which new information is added to each pixel of the image by combining the distance, the speed, and other information.

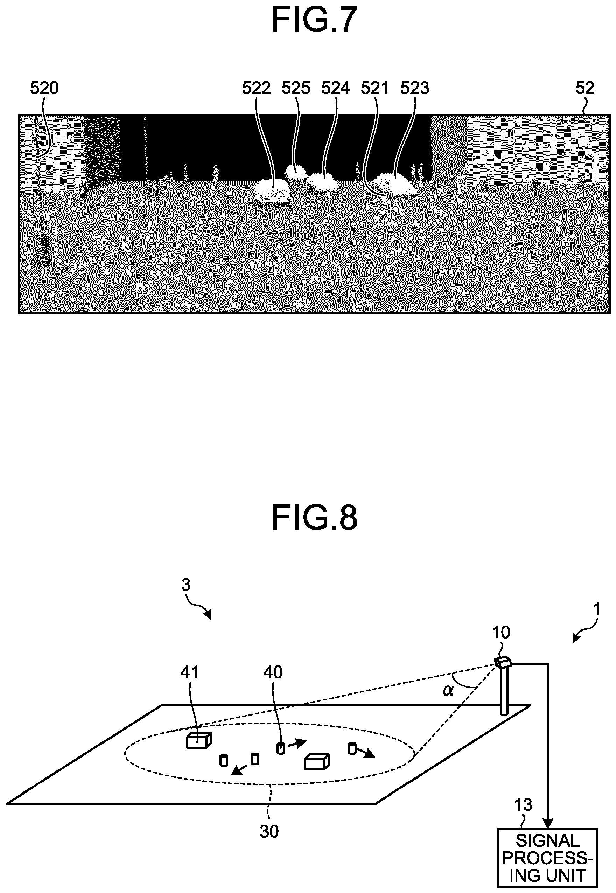

FIG. 7 is a view schematically illustrating an example of a composite image 52. In FIG. 7, objects 520 to 525 respectively correspond to the objects 500 to 505 illustrated in FIG. 5. The composite image 52 illustrated in FIG. 7 can be expressed, for example, as an image in which the captured image is pasted as a texture to the speed point cloud. The composite image 52 is, for example, an image in which each of the objects 520 to 525 can be easily recognized when being observed by a person.

The 2D object detection unit 151 extracts a partial image corresponding to 3D region information from the composite image supplied from the image combining unit 150 on the basis of the 3D region information output from the 3D object detection unit 141. Furthermore, the 2D object detection unit 151 detects an object from the extracted partial image, and generates region information indicating, for example, a rectangular region having a minimum area including the detected object. This region information based on the captured image is referred to as 2D region information. The 2D region information is represented as a set of points or pixels each having a value, given for each of the measurement points by the light detection and ranging unit 11 or each of the pixels, falls within a designated range.

The 2D object detection unit 151 outputs the generated partial image and 2D region information.

The 2D object recognition unit 152 acquires the partial image output from the 2D object detection unit 151, performs image recognition processing such as inference processing on the acquired partial image, and estimates attribute information related to the partial image. In this case, for example, in a case where a target is a vehicle, the attribute information is expressed as a unique numerical value being assigned to each of the pixels of the image and indicating that the pixel belongs to the vehicle. Hereinafter, the attribute information based on the partial image (captured image) is referred to as 2D attribute information.

In a case where a certainty factor of the estimated 2D attribute information is a certain value or more, that is, the recognition processing can be performed effectively, the 2D object recognition unit 152 outputs time information indicating the time at which image capturing has been performed, the 2D region information, and the 2D attribute information in an integrated manner. Note that, in a case where the certainty factor of the estimated 2D attribute information is less than the certain value, the 2D object recognition unit 152 outputs the time information and the 2D region information in an integrated manner.

The composite point cloud output from the point cloud combining unit 140 and the 3D attribute information and the 3D region information, which are output from the 3D object recognition unit 142, are input to the I/F unit 160. Furthermore, the composite image and the captured image, which are output from the image combining unit 150, and the 2D attribute information and the 2D region information, which are output from the 2D object recognition unit 152, are input to the I/F unit 160. The I/F unit 160 selects information to be output from the input composite point cloud, 3D attribute information, 3D region information, composite image, captured image, 2D attribute information, and 2D region information in accordance with a setting from the outside, for example.

FIG. 8 is a schematic diagram illustrating an arrangement example of the sensor unit 10 according to the first embodiment. A space 3 is a space including a target space to be subjected to spatial measurement. The space 3 may include a moving object 40 that is moving or a static object 41 that is stationary. The sensor unit 10 is arranged in the space 3. In the sensor unit 10, for example, the light detection and ranging unit 11 scans an object in an angle range of an angle α, and measures the inside of a target range 30 in the space 3.

Note that the target range 30 is illustrated to be a plane in the example of FIG. 8 for the sake of description, but the target range 30 actually includes a range in the height direction. Furthermore, the sensor unit 10 performs scanning not only in the horizontal direction but also in the vertical direction as described with reference to FIG. 3, but attention will be paid to an angle range in the horizontal direction here, and description of an angle range in the vertical direction will be omitted.

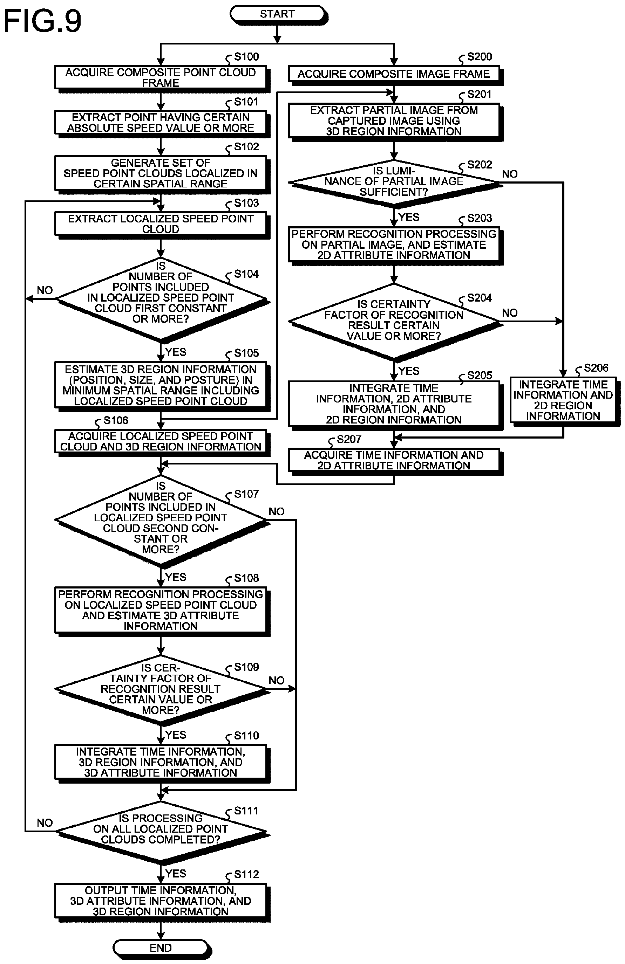

FIG. 9 is a flowchart illustrating an example of processing by the sensing system 1 according to the first embodiment.

Each process illustrated in FIG. 9 is executed by each unit in the signal processing unit 13. More specifically, Steps S100 to S112 illustrated on the left side in FIG. 9 correspond to processing related to 3D data mainly executed by the point cloud combining unit 140, the 3D object detection unit 141, and the 3D object recognition unit 142. Furthermore, Steps S200 to S207 illustrated on the right side correspond to processing related to 2D data mainly executed by the image combining unit 150, the 2D object detection unit 151, and the 2D object recognition unit 152.

In FIG. 9, in Step S100, the point cloud combining unit 140 acquires a composite point cloud for one frame (referred to as a composite point cloud frame) on the basis of a speed point cloud measured by scanning within the angle range 200 performed by the light detection and ranging unit 11 and a captured image captured by the camera 12.

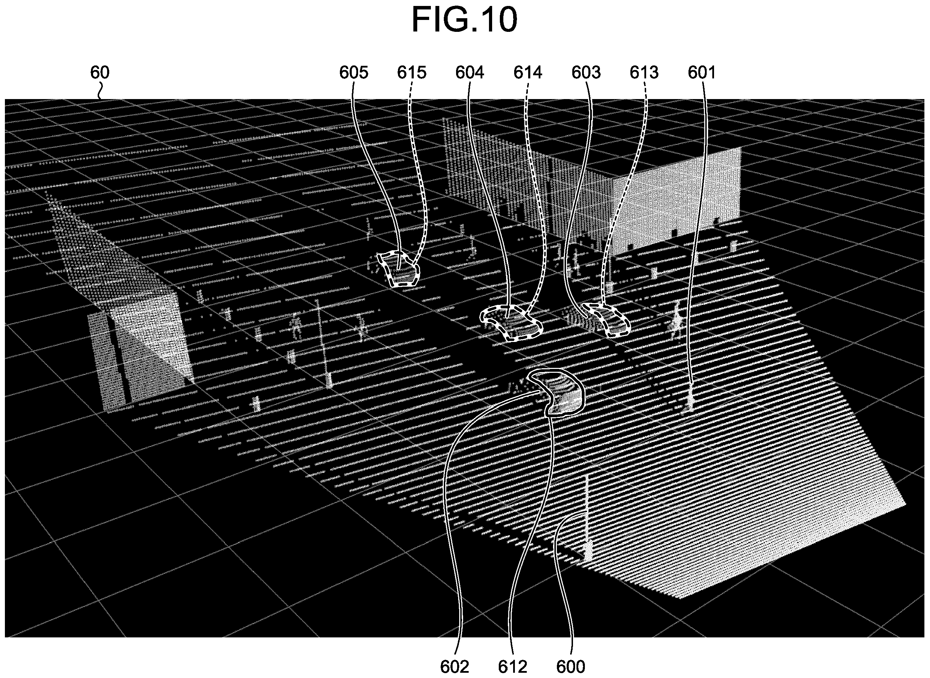

FIG. 10 is a view schematically illustrating an example of the speed point cloud. Note that it is assumed that the sensor unit 10 is arranged outside the lower right corner of the drawing in the example of FIG. 10, and the speed point cloud detected by the light detection and ranging unit 11 of the sensor unit 10 is illustrated in an overhead view. A speed point cloud 60 can be expressed as, for example, an image in which spots of transmission light emitted from light detection and ranging unit 11 are aligned on the scan lines 210.

In FIG. 10, the speed point cloud 60 includes, for example, objects 600 to 605 respectively corresponding to the objects 520 to 525 of FIG. 7. It is illustrated that, among the objects 600 to 605, the objects 603 to 605 have regions 613 to 615 displayed in the first color, and are moving so as to approach the sensor unit 10. Furthermore, it is illustrated that the object 602 has a region 612 displayed in the second color and is moving away from the sensor unit 10. On the other hand, it is illustrated that the objects 600 and 601 and a region corresponding to the ground and a region corresponding to a fixed object such as a building are displayed in a third color, and are stationary with respect to the sensor unit 10.

In the next Step S101, the 3D object detection unit 141 extracts points each having the certain absolute speed value or more from the composite point cloud generated in Step S100. In the next Step S102, the 3D object detection unit 141 generates a set of speed point clouds (localized speed point clouds) localized in the certain spatial range among the points extracted in Step S101. In Step S102, the 3D object detection unit 141 can generate a plurality of the localized speed point clouds from the composite point cloud frame.

In the next Step S103, the 3D object detection unit 141 extracts one localized speed point cloud as a target to be processed, from the localized speed point clouds generated in Step S102. In the next Step S104, the signal processing unit 13 causes the 3D object detection unit 141 to determine whether or not the number of points included in the extracted localized speed point cloud is the first constant or more. When determining that the number of points is less than the first constant (Step S104, "No"), the 3D object detection unit 141 returns the processing to Step S103, extracts a next localized speed point cloud from the localized speed point clouds generated in Step S102, and continues the processing.

When the 3D object detection unit 141 determines that the number of points is the first constant or more (Step S104, "Yes"), the processing is shifted to Step S105. In Step S105, the 3D object detection unit 141 estimates region information (a position, a size, and a posture) of, for example, the minimum region including the localized speed point cloud as the target, and acquires 3D region information.

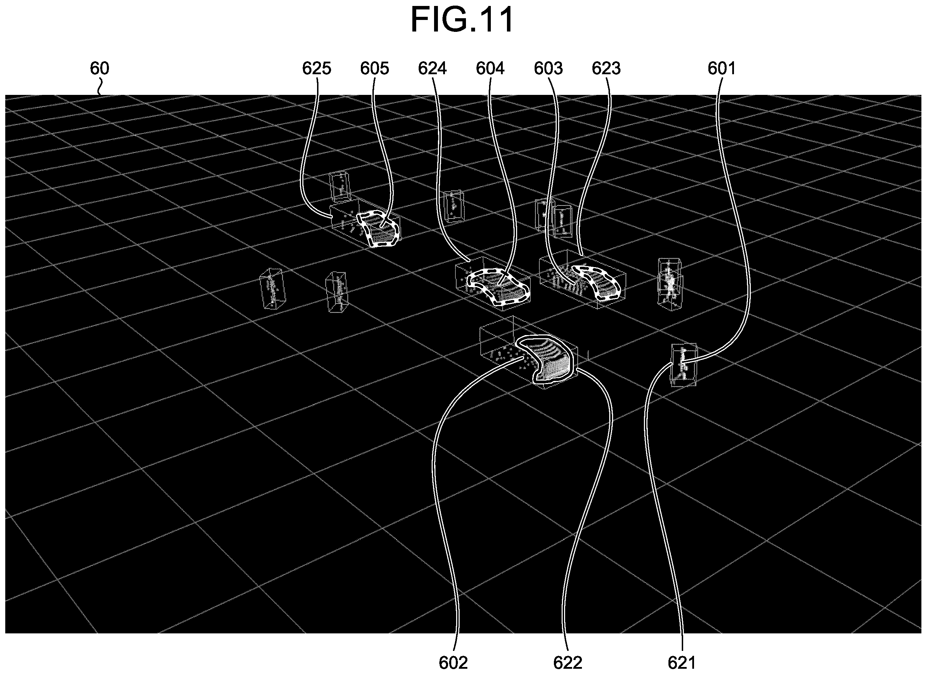

FIG. 11 is a view schematically illustrating an example of the 3D region information extracted from the speed point cloud 60. The example of FIG. 11 illustrates a state in which pieces of 3D region information 621 to 625 are generated in accordance with the objects 601 to 605 each having the certain absolute speed value or more in the speed point cloud 60. Each piece of the 3D region information 621 to 625 is illustrated as, for example, a rectangular parallelepiped having the minimum volume and including the localized speed point cloud constituting each of the objects 601 to 605. Note that the object 601 is illustrated as one moving at the certain absolute speed value or more in the example of FIG. 11.

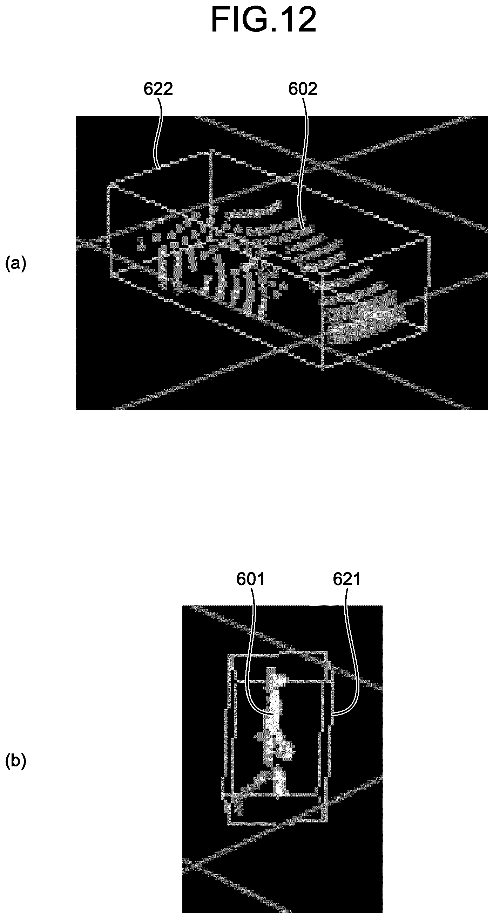

FIG. 12 is a schematic view illustrating the example of the 3D region information in more detail. Section (a) of FIG. 12 illustrates an example of the 3D region information 622 for the object 602. Furthermore, Section (b) of FIG. 12 illustrates an example of the 3D region information for the object 601.

When the 3D region information is acquired in Step S105, the 3D object detection unit 141 shifts the processing to Step S106. At the same time, the 3D object detection unit 141 passes the 3D region information to the 2D object detection unit 151 for the process in Step S201 to be described later.

In Step S106, the 3D object recognition unit 142 acquires the localized speed point cloud and the 3D region information from the 3D object detection unit 141. After the process in Step S106, the processing is shifted to Step S107 to be described later.

On the other hand, the process in Step S200 is executed in parallel with the process of acquiring the composite image frame in Step S100 described above. In Step S200, the image combining unit 150 generates a composite image for one frame (referred to as a composite image frame) on the basis of the speed point cloud acquired by scanning within the angle range 200 performed by the light detection and ranging unit 11 and the captured image acquired by the camera 12.

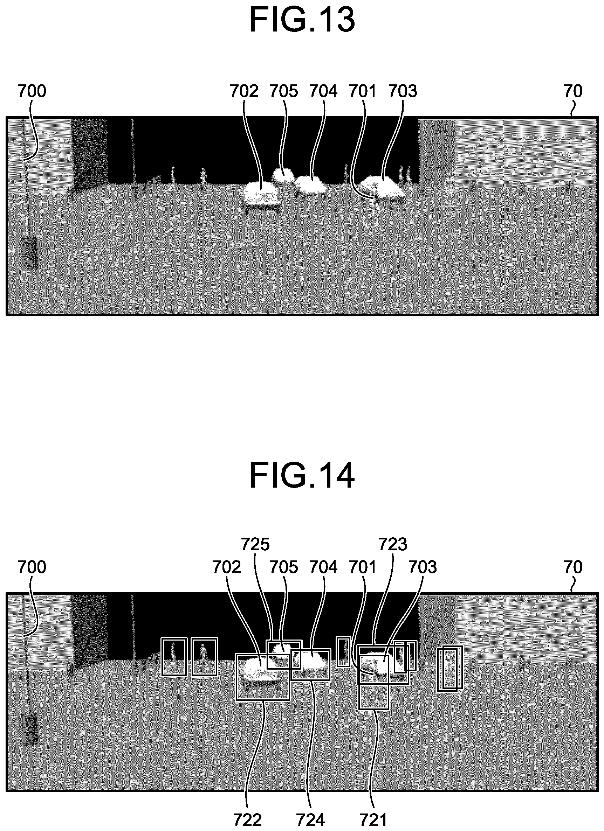

FIG. 13 is a diagram schematically illustrating an example of the composite image frame. In FIG. 13, a composite image frame 70 may correspond to a frame of the captured image captured by the camera 12. In the example of FIG. 13, the composite image frames 70 includes objects 700 to 705 respectively corresponding to the objects 600 to 605 of FIG. 10.

In the next Step S201, the 2D object detection unit 151 acquires the 3D region information estimated by the 3D object detection unit 141 in Step S105 described above. Using the acquired 3D region information, the 2D object detection unit 151 extracts a partial image from the composite image which is a whole image corresponding to the entire captured image.

FIG. 14 is a view schematically illustrating a state of acquiring 3D region information from the composite image frame 70. FIG. 14 illustrates a state in which pieces of 3D region information 721 to 725 are acquired for the objects 701 to 705 each having the certain absolute speed value or more among the objects 700 to 705. For example, pieces of the 3D region information 721 to 725 may be acquired as the minimum rectangular regions including the objects 701 to 705, respectively. Without being limited thereto, each piece of the 3D region information 721 to 725 may be region information indicating a region having a margin with respect to the minimum rectangular region.

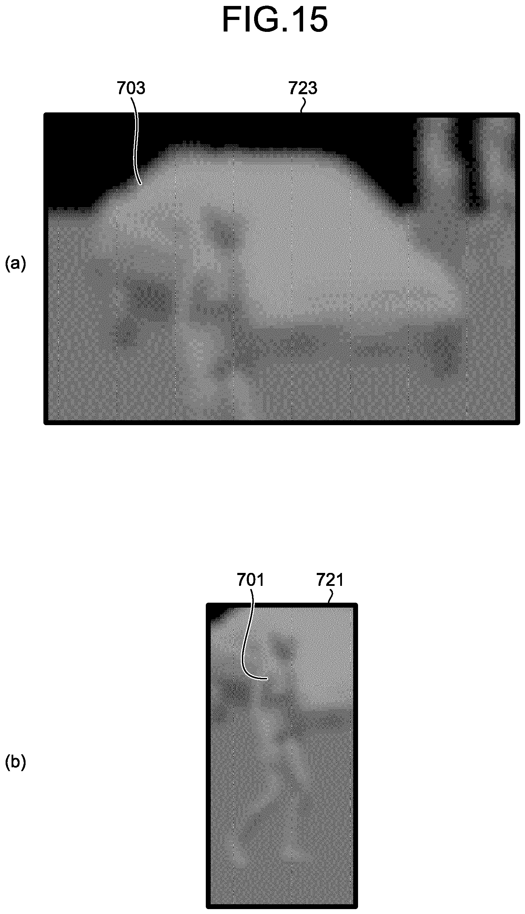

FIG. 15 is a view schematically illustrating an example of the partial image extracted on the basis of the 3D region information. Section (a) of FIG. 15 illustrates an example of a partial image based on the 3D region information 723 corresponding to the object 703. Furthermore, Section (b) of FIG. 15 illustrates an example of a partial image based on the 3D region information 721 corresponding to the object 701.

In the next Step S202, the 2D object detection unit 151 determines whether or not luminance of the partial image acquired in Step S201 is sufficient. As an example, the 2D object detection unit 151 calculates, for example, an average value of luminance values of pixels of the partial image as a luminance value of the partial image. The 2D object detection unit 151 determines that the luminance of the partial image is sufficient when the calculated luminance value is a threshold or more.

In a case where the 2D object detection unit 151 determines that the luminance value of the partial image is not sufficient (Step S202, "No"), the processing is shifted to Step S206. On the other hand, in a case where the 2D object detection unit 151 determines that the luminance value of the partial image is sufficient (Step S202, "Yes"), the processing is shifted to Step S203.

In Step S203, the 2D object recognition unit 152 acquires a partial image from the 2D object detection unit 151, and executes recognition processing on the acquired partial image. The 2D object recognition unit 152 estimates 2D attribute information on the basis of a result of the recognition processing.

In the next Step S204, the 2D object recognition unit 152 determines whether or not a certainty factor of the recognition result in Step S203 is the certain value or more. In a case where the 2D object recognition unit 152 determines that the certainty factor is less than the certain value (Step S204, "No"), the processing is shifted to Step S206. On the other hand, in a case where the 2D object recognition unit 152 determines that the certainty factor is the certain value or more (Step S204, "Yes"), the processing is shifted to Step S205.

In Step S205, the 3D object recognition unit 142 outputs time information indicating the time at which the captured image has been captured, the 2D attribute information, and 2D region information to the I/F unit 160 in an integrated manner.

Meanwhile, as described above, the processing is shifted to Step S206 in the case where it is determined in Step S202 that the luminance of the partial image is not sufficient (Step S202, "No") or in the case where it is determined in Step S204 that the certainty factor is less than the certain value (Step S204, "No"). In these cases, the 2D attribute information is not acquired in the 2D object recognition unit 152. Therefore, in Step S206, the 2D object recognition unit 152 outputs the time information and the 2D region information to the I/F unit 160 in an integrated manner.

After the process in Step S205 or Step S206, the processing is shifted to Step S207. In Step S207, the 2D object recognition unit 152 outputs the time information and the 2D attribute information to the 3D object recognition unit 142.

Returning to the description of the processing on the left side of FIG. 9, in transition from Step S106 to Step S107, the 3D object recognition unit 142 acquires the time information and the 2D attribute information output from the 2D object recognition unit 152 in Step S207.

In Step S107, the 3D object recognition unit 142 determines whether or not the number of points included in the localized speed point cloud acquired in Step S106 is the second constant or more. In a case where the 3D object recognition unit 142 determines that the number of points is less than the second constant (Step S107, "No"), the processing is shifted to Step Sill. On the other hand, in a case where the 3D object recognition unit 142 determines that the number of points is the second constant or more (Step S107, "Yes"), the processing is shifted to Step S108.

In Step S108, the 3D object recognition unit 142 executes object recognition processing on the localized speed point cloud as the target, and estimates 3D attribute information. In the next Step S109, the 3D object recognition unit 142 determines whether or not a certainty factor of the 3D attribute information estimated in Step S108 is the certain value or more. In a case where the 3D object recognition unit 142 determines that the certainty factor is less than the certain value (Step S109, "No"), the processing is shifted to Step Sill. On the other hand, in a case where the 3D object recognition unit 142 determines that the certainty factor is the certain value or more (Step S109, "Yes"), the processing is shifted to Step S110.

In Step S110, the 3D object recognition unit 142 integrates time information indicating the time at which measurement has been performed, the 3D region information, and the 3D attribute information.

In the next Step Sill, the 3D object recognition unit 142 determines whether or not processing for all the localized speed point clouds generated in Step S103 has been completed. When determining that the processing for all the generated localized speed point clouds has not been completed (Step Sill, "No"), the signal processing unit 13 returns the processing to Step S103, extracts the next localized speed point cloud from the localized speed point clouds generated in Step S102, and continues the processing.

On the other hand, when the 3D object recognition unit 142 determines that the processing for all the generated localized speed point clouds has been completed (Step Sill, "Yes"), the processing is shifted to Step S112. In Step S112, the 3D object recognition unit 142 outputs the time information, the 3D attribute information, and the 3D region information integrated in Step S110 to the I/F unit 160 for all the generated localized speed point clouds.

When the time information, the 3D attribute information, and the 3D region information are output in Step S112, the series of processes according to the flowchart of FIG. 9 is ended.

Here, the speed point cloud output from the light detection and ranging unit 11 and the captured image output from the camera 12 will be compared. The captured image has a higher resolution than the speed point cloud. Therefore, the recognition processing using the captured image can achieve higher accuracy than the recognition processing using the speed point cloud. On the other hand, the recognition processing using the captured image requires a higher calculation load than the recognition processing using the speed point cloud. Three-dimensional position estimation is difficult in the captured image that has no three-dimensional spatial information, but is easy in the speed point cloud that has the three-dimensional spatial information. Furthermore, the speed point cloud has speed information, and thus, makes it easy to detect a mobile body, whereas the captured image has color information, and thus, makes it easy to acquire and estimate attribute information.

In this manner, the speed point cloud output from the light detection and ranging unit 11 and the captured image output from the camera 12 have different characteristics. Therefore, by performing the object detection and recognition processing by combining the output of the light detection and ranging unit 11 and the output of the camera 12 according to the processing of the flowchart of FIG. 9, the detection and recognition of the target object can be stably executed under various environments.

### (3-1. Modification of First Embodiment)

Next, a modification of the first embodiment will be described. In the first embodiment described above, only one sensor unit 10 is arranged in the space 3 including the target space to be subjected to spatial measurement, and measurement and capturing are performed from one direction. Such a system that performs the measurement and capturing with respect to the target space from one direction is referred to as a single-angle system.

In the case of the single-angle system, the probability of occurrence of shielding is high when there are a large number of objects in the target space or when the object is large. Therefore, there is a possibility that only a part of a target object can be measured, and the number of measurement points decreases in the single-angle system. The decrease in the number of measurement points for the target object leads to a decrease in detection probability and recognition accuracy for the target object.

Therefore, in the modification of the first embodiment, a plurality of the sensor units 10 that performs measurement and capturing from different directions is arranged in the space 3 including a target space, and speed point clouds measured by the plurality of sensor units 10 are integrated. Since the measurement and capturing are performed from a plurality of directions, even in a case where shielding occurs in measurement and capturing from a direction, occurrence of shielding can be prevented by performing measurement and capturing from another direction. Such a system that performs the measurement and capturing with respect to the target space from the plurality of directions is referred to as a multi-angle system.

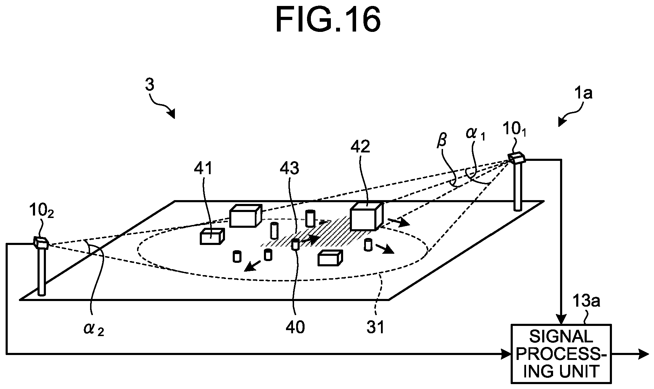

FIG. 16 is a schematic diagram illustrating an arrangement example of the plurality of sensor units 10 according to the modification of the first embodiment. In FIG. 16, a sensing system 1a includes two sensor units 10₁ and 10₂ arranged in the space 3 and a signal processing unit 13a. The light detection and ranging unit 11 in the sensor unit 10₁ scans a target in an angle range of an angle α₁, and the light detection and ranging unit 11 in the sensor unit 10₂ scans a target in an angle range of an angle α₂. In the example of FIG. 16, the sensor units 10₁ and 10₂ are arranged at positions opposite to each other with respect to a common target range 31, and perform scanning and capturing of the target range 31 from different directions.

In the example of FIG. 16, a shielding region 43 is generated in an angle range of an angle β due to a static object 42, for example, at the time of measurement and capturing from the sensor unit 10₁. In the multi-angle system, even in such a case, it is possible to perform the measurement and capturing of a target object included in the shielding region 43 caused by the sensor unit 10₁ by utilizing the other sensor unit 10₂.

Note that, in a general LiDAR, for example, a dToF-LiDAR using a pulse ToF, there is a possibility that a defect occurs in a measured point cloud due to occurrence of interference in a case where the same target object is simultaneously irradiated with light from a plurality of directions. On the other hand, interference does not usually occur in coherent detection. Therefore, in a FMCW-LiDAR that performs the coherent detection, the defect is less likely to occur in the measured point cloud even in the case where the same target object is simultaneously irradiated with light from the plurality of directions.

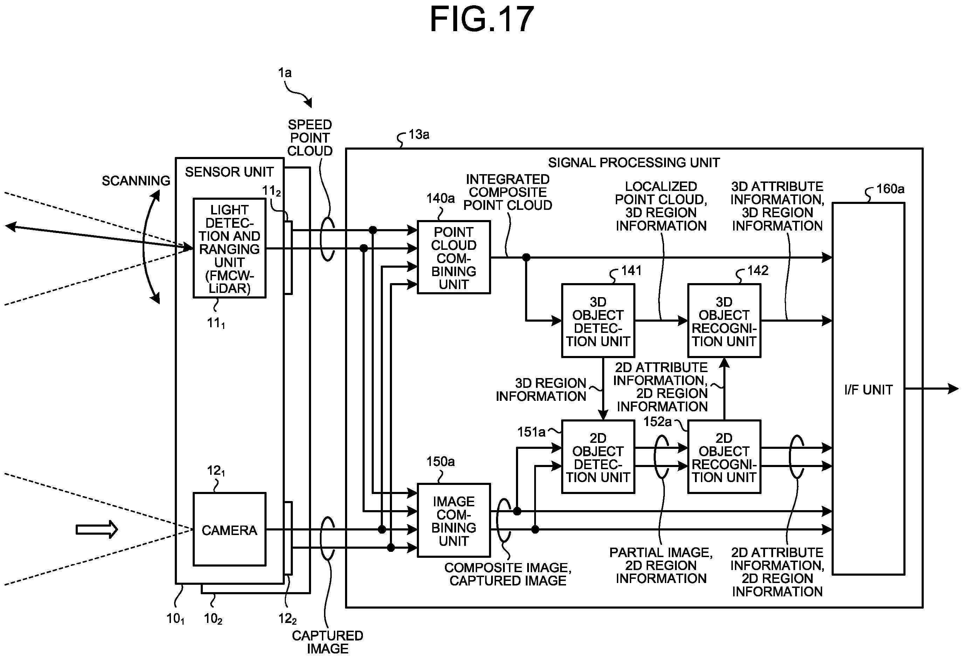

FIG. 17 is a block diagram illustrating a configuration of an example of the sensing system according to the modification of the first embodiment. In FIG. 17, the sensing system 1a includes two sensor units 10₁ and 10₂. The sensor unit 10₁ includes a light detection and ranging unit 11₁ and a camera 12₁. Similarly, the sensor unit 10₂ includes a light detection and ranging unit 11₂ and a camera 12₂.

The signal processing unit 13a includes a point cloud combining unit 140a, the 3D object detection unit 141, the 3D object recognition unit 142, an image combining unit 150a, a 2D object detection unit 151a, a 2D object recognition unit 152a, and an I/F unit 160a.

The point cloud combining unit 140a acquires a speed point cloud and a captured image respectively output from the light detection and ranging unit 11₁ and the camera 12₁ of the sensor unit 10₁. Similarly, the point cloud combining unit 140a acquires a speed point cloud and a captured image respectively output from the light detection and ranging unit 11₂ and the camera 12₂ of the sensor unit 10₂.

For each of the sensor units 10₁ and 10₂, the point cloud combining unit 140a refers to a pixel of the captured image corresponding to an angular coordinate of each of measurement points by coordinate system transformation with respect to the acquired speed point cloud in the same manner as in the first embodiment, and acquires color information representing the point for each of the measurement points. The point cloud combining unit 140a adds the acquired color information of each of the measurement points to measurement information of each of the measurement points for each of the sensor units 10₁ and 10₂. The point cloud combining unit 140a generates a composite point cloud in which each of the measurement points has speed information and the color information for each of the sensor units 10₁ and 10₂.

Note that the point cloud combining unit 140a may include a processing unit that performs processing related to the sensor unit 10₁ and a processing unit that performs processing related to the sensor unit 10₂. Without being limited thereto, the point cloud combining unit 140a may perform the processing related to the sensor unit 10₁ and the processing related to the sensor unit 10₂ in a time-division manner by a common processing unit.

On the basis of the angular coordinate of each of the measurement points of each of the speed point clouds, the point cloud combining unit 140a integrates the composite point cloud generated on the basis of the output of the sensor unit 10₁ and the composite point cloud generated on the basis of the output of the sensor unit 10₂ to generate an integrated composite point cloud. The integrated point cloud (integrated composite point cloud) refers to what is obtained by integrating a plurality of point clouds (composite point clouds) into a single point cloud while matching spatial positional relationships thereof. The composite point clouds may be integrated using the angular coordinates calibrated in advance on the basis of the positional relationship between the light detection and ranging units 11₁ and 11₂ included in the sensor units 10₁ and 10₂, respectively.

Here, speed measurement in the FMCW-LiDAR, which is applied to the light detection and ranging units 11₁ and 11₂, is performed on the basis of the Doppler principle. Therefore, the speed represented by each of the speed point clouds is only a speed (radial speed) of a radial component. The point cloud combining unit 140a integrates the respective composite point clouds by vector combining of a normal line and the radial speed estimated by each of the measurement stores and spatial interpolation thereof.

The point cloud combining unit 140a outputs the generated integrated composite point cloud to the 3D object detection unit 141 and the I/F unit 160a.

Processes in the 3D object detection unit 141 and the 3D object recognition unit 142 are similar to those in the 3D object detection unit 141 and the 3D object recognition unit 142 according to the first embodiment described above, and thus, a detailed description thereof will be omitted here.

The 3D object detection unit 141 acquires the integrated composite point cloud output from the point cloud combining unit 140a, and extracts a localized point cloud from the acquired integrated composite point cloud. Furthermore, the 3D object detection unit 141 generates region information that is information indicating a range in which the target object, that is, the localized point cloud is present in a point cloud representing the entire target space. The 3D object detection unit 141 outputs a localized point cloud and 3D region information corresponding to the localized point cloud.

The 3D object recognition unit 142 acquires the localized point cloud and the 3D region information output from the 3D object detection unit 141. Furthermore, the 3D object recognition unit 142 acquires 2D region information and 2D attribute information output from the 2D object recognition unit 152a to be described later. The 3D object recognition unit 142 performs object recognition on the localized point cloud on the basis of the acquired localized point cloud and 3D region information and the 2D region information and 2D attribute information acquired from the 2D object recognition unit 152a. The 3D object recognition unit 142 estimates 3D attribute information regarding the recognized object on the basis of a result of the object recognition.

In a case where a certainty factor of the estimated 3D attribute information is a certain value or more, that is, the recognition processing has been performed effectively, the 3D object recognition unit 142 outputs time information indicating the time at which measurement has been performed, the 3D region information, and the 3D attribute information in an integrated manner.

The image combining unit 150a acquires the speed point cloud and the captured image respectively output from the light detection and ranging unit 11₁ and the camera 12₁ of the sensor unit 10₁. Similarly, the image combining unit 150a acquires the speed point cloud and the captured image respectively output from the light detection and ranging unit 11₂ and the camera 12₂ of the sensor unit 10₂.

Each of the image combining unit 150a, the 2D object detection unit 151a, and the 2D object recognition unit 152a performs processing on each of the output of the sensor unit 10₁ and the output of the sensor unit 10₂. For example, the image combining unit 150a, the 2D object detection unit 151a, and the 2D object recognition unit 152a execute the processing on the output of the sensor unit 10₁ and the processing on the output of the sensor unit 10₂ in parallel or in a time-division manner.

In this manner, the image combining unit 150a does not integrate the captured image output from the sensor unit 10₁ and the captured image output from the sensor unit 10₂, which is different from the point cloud combining unit 140a described above. That is, 3D point clouds acquired at different angles, respectively, can be easily integrated by being three-dimensionally combined in consideration of the respective postures and positions. On the other hand, it is difficult to combine the captured images captured at the different angles on a two-dimensional plane, and thus, integration is not performed.

The image combining unit 150a outputs the captured image and the generated composite image for each of the sensor units 10₁ and 10₂.

On the basis of the 3D region information output from the 3D object detection unit 141, the 2D object detection unit 151a extracts each of partial images corresponding to the 3D region information from each of the composite images supplied from the image combining unit 150a for each of the sensor units 10₁ and 10₂. Furthermore, the 2D object detection unit 151a detects an object from each of the extracted partial images and generates 2D region information including the detected object.

The 2D object detection unit 151a outputs each of the partial images and each piece of the 2D region information generated for each of the sensor units 10₁ and 10₂.

The 2D object recognition unit 152a performs image recognition processing on the partial image output from the 2D object detection unit 151a for each of the sensor units 10₁ and 10₂. The 2D object recognition unit 152a estimates 2D attribute information regarding the partial image for each of the sensor units 10₁ and 10₂.

In a case where a certainty factor of the estimated 2D attribute information is a certain value or more for each of the sensor units 10₁ and 10₂, the 2D object recognition unit 152a integrates time information indicating the time at which capturing has been performed, the 2D region information, and the 2D attribute information. The 2D object recognition unit 152a outputs the time information, the 2D region information, and the 2D attribute information related to the sensor unit 10₁ to the I/F unit 160a in an integrated manner. Furthermore, the 2D object recognition unit 152a outputs the time information, the 2D region information, and the 2D attribute information related to the sensor unit 10₂ to the I/F unit 160a in an integrated manner.

The integrated composite point cloud output from the point cloud combining unit 140a and the 3D attribute information and the 3D region information output from the 3D object recognition unit 142 are input to the I/F unit 160a. Furthermore, the composite image and the captured image output for each of the sensor units 10₁ and 10₂ from the image combining unit 150a are input to the I/F unit 160a. Moreover, the 2D attribute information and the 2D region information output from the 2D object recognition unit 152a for each of the sensor units 10₁ and 10₂ are input to the I/F unit 160a. The I/F unit 160 selects information to be output from the input integrated composite point cloud, 3D attribute information, and 3D region information, and the composite image, the captured image, the 2D attribute information, and the 2D region information, which have been input for each of the sensor units 10₁ and 10₂, according to a setting from the outside, for example.

Note that, as actual processing, for example, out of the processing according to the flowchart of FIG. 9, the processing in Steps S200 to S207 is executed in parallel according to the number of sensor units 10 (two in the examples of FIGS. 16 and 17) included in the sensing system 1a.

### [4. Second Embodiment]

Next, a second embodiment of the present disclosure will be described. In the second embodiment, a target range of measurement and capturing by the sensor unit 10 is set to be narrower than a scannable range of the sensor unit 10.

Due to its characteristics, a FMCW-LiDAR has a lower resolution than a camera, and in general, the number of measurement points of a point cloud corresponding to a target object decreases when the target object is far from a device when the target object is small. Therefore, there is a possibility that detection probability and recognition accuracy for the target object far from the device or the target object smaller than a certain degree decrease. Note that a point cloud of a portion corresponding to the target object in a point cloud acquired from the entire target space to be subjected to measurement is referred to as a partial point cloud.

Therefore, in the second embodiment, a region including a target object, such as a person or other moving bodies, in the target space to be subjected to measurement is selected as a region of interest (ROI) to perform local scanning. With this local scanning, the number of measurement points of the partial point cloud corresponding to the target object can be increased as compared with a case where the entire target space is scanned, and a resolution of the point cloud can be locally improved. Furthermore, in a case where the target object moves, a local high resolution with respect to the target object can be maintained by causing the region of interest where the scanning is performed to follow the movement.

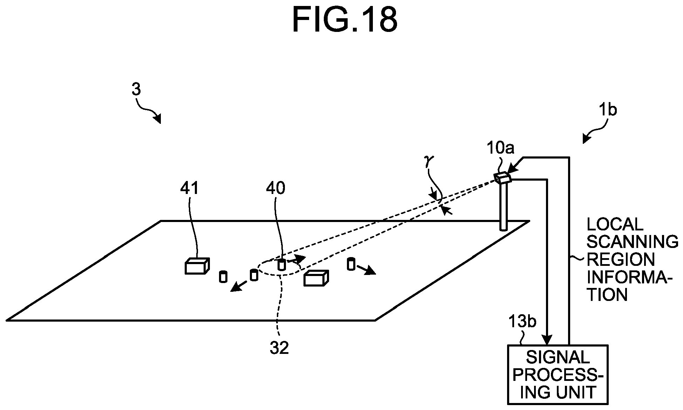

FIG. 18 is a schematic diagram illustrating an arrangement example of a sensor unit according to the second embodiment. In FIG. 18, a sensing system 1b according to the second embodiment includes a sensor unit 10a and a signal processing unit 13b.

In the second embodiment, a first scan mode in which an angle range (first scan range) of an angle α that can be scanned by a light detection and ranging unit 11a, which will be described later, is scanned and a second scan mode in which an angle range (second scan range) of an angle γ with respect to the angle α is scanned are included as scan modes of the sensor unit 10a. In this manner, scanning is performed in the second scan range narrower than the first scan range in the second scan mode.

The light detection and ranging unit 11a can scan a region of interest 32 in the angle range of the angle γ in the second scan mode. When the scan mode is the second scan mode, the signal processing unit 13b supplies, to the sensor unit 10a, local scanning region information for controlling the light detection and ranging unit 11a to scan the region of interest 32.

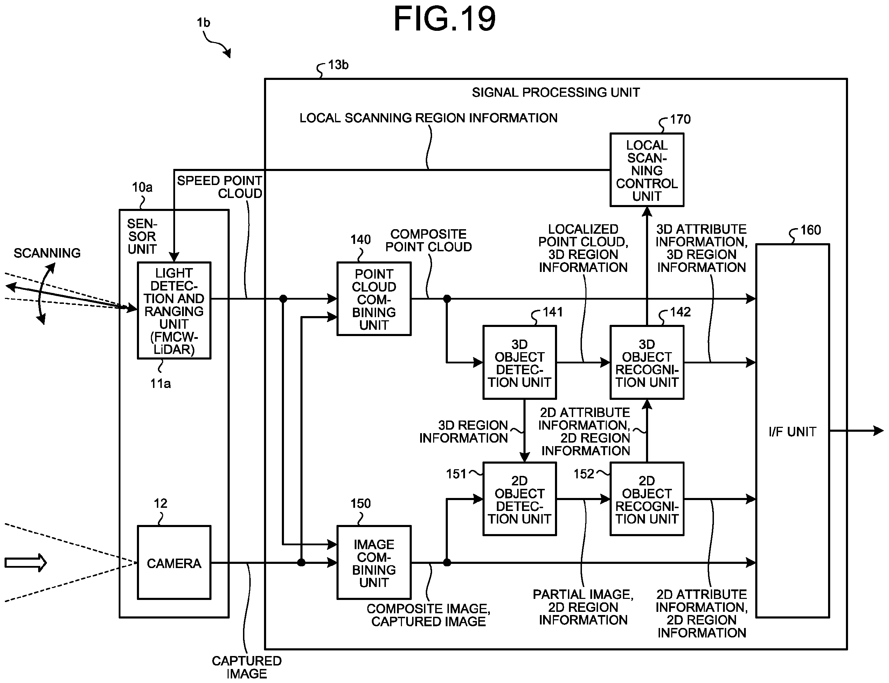

FIG. 19 is a block diagram illustrating a configuration of an example of the sensing system 1b according to the second embodiment. In the sensing system 1b, the signal processing unit 13b includes a local scanning control unit 170 which is added to the configuration of the signal processing unit 13 according to the first embodiment illustrated in FIG. 4. The local scanning control unit 170 acquires 3D region information from the 3D object recognition unit 142. In a case where the scan mode of the light detection and ranging unit 11a is the second scan mode, the local scanning control unit 170 generates a local scanning control signal on the basis of the 3D region information acquired from the 3D object recognition unit 142, and outputs the local scanning control signal to the light detection and ranging unit 11a.

In the light detection and ranging unit 11a, the scanning unit 100 is controlled according to the local scanning control signal output from the local scanning control unit 170 to scan the region of interest 32.

Note that basic functions of the point cloud combining unit 140, the 3D object detection unit 141, and the 3D object recognition unit 142, and the image combining unit 150, the 2D object detection unit 151, and the 2D object recognition unit 152 in the signal processing unit 13b are similar to those of the corresponding units in the signal processing unit 13 described with reference to FIG. 4, and thus, a description thereof will be omitted here.

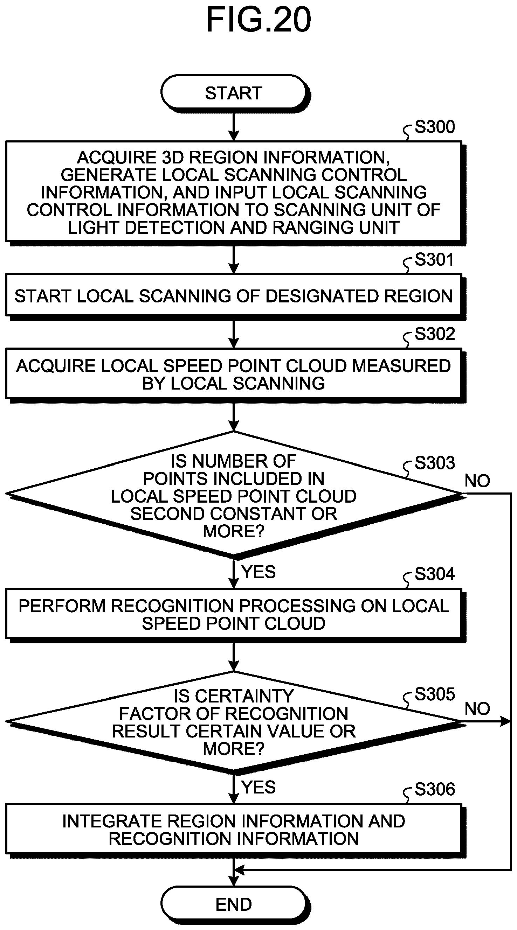

FIG. 20 is a flowchart of an example illustrating processing by the signal processing unit 13b according to the second embodiment. The processing according to the flowchart of FIG. 20 is started, for example, immediately before the process in Step S206 of the flowchart of FIG. 9. That is, prior to the processing of the flowchart of FIG. 20, the processing according to the flowchart of FIG. 9 is started in the first scan mode as the scan mode of the light detection and ranging unit 11a.

For example, it is assumed that a partial image extracted in Step S201 is an image corresponding to a region where a movement is detected from a speed point cloud. In this case, when the 2D object detection unit 151 determines in Step S202 that a luminance value of the partial image is not sufficient (Step S202, "No") and the processing is shifted to Step S206, the processing according to the flowchart of FIG. 20 is executed. Furthermore, when the 2D object recognition unit 152 determines in Step S204 that a certainty factor is less than a certain value (Step S204, "No") and the processing is shifted to Step S206, the processing according to the flowchart of FIG. 20 is executed.

Alternatively, when the recognition result of the partial image corresponding to the region where the movement has been detected from the speed point cloud is a preset target object and it is determined that more detailed three-dimensional movement analysis for the target object is necessary, the processing according to the flowchart of FIG. 20 may be executed. This determination may be performed by a person who uses the sensing system 1b, or may be automatically performed by the sensing system 1b itself or an application program that uses a measurement result of the sensing system 1b.

Furthermore, the partial image corresponding to the region where the movement has been detected from the speed point cloud may be presented to a user, and the processing according to the flowchart of FIG. 20 may be executed in response to a request for detailed analysis or the like by the user in response to the presentation.

In FIG. 20, in Step S300, the scan mode of the light detection and ranging unit 11a is shifted from the first scan mode to the second scan mode. The local scanning control unit 170 acquires 3D region information as a region of interest from the 3D object recognition unit 142, and generates local scanning control information on the basis of the acquired 3D region information. More specifically, by coordinate system transformation, the local scanning control unit 170 converts the 3D region information as the region of interest, which indicates a region where the target object is present, into scanning region information defined by a scanning coordinate system of the light detection and ranging unit 11a. The local scanning control unit 170 generates the local scanning control information on the basis of the scanning region information. The local scanning control unit 170 inputs the generated local scanning control information to the scanning unit 100 of the light detection and ranging unit 11a.

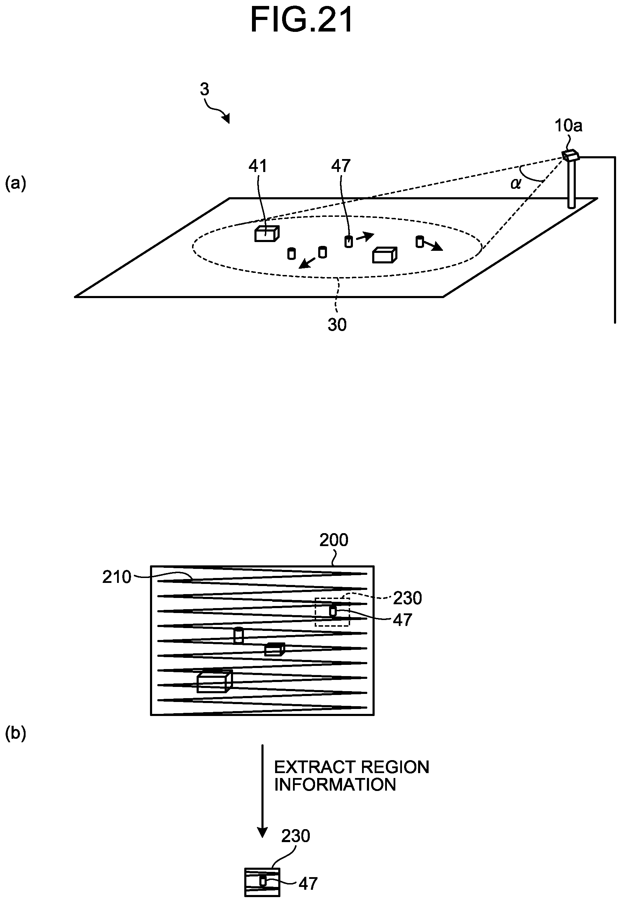

FIG. 21 is a schematic diagram for describing a process of generating the local scanning control information according to the second embodiment. As illustrated in Section (a) of FIG. 21, the sensor unit 10a scans the object in the angle range of the angle α in the first scan mode, and measures the inside of the target range 30 in the space 3. Here, it is assumed that a moving object 47 that is moving is a target to be noted. The moving object 47 is, for example, a person who is moving at a predetermined speed or more. The moving object 47 is not limited thereto, and may be another object as long as being an object that is moving such as a moving vehicle.

As illustrated in Section (b) of FIG. 21, the 3D object detection unit 141 extracts region information of a region 230 including the moving object 47 to be noted from the angle range 200 of scanning performed by the sensor unit 10a. On the basis of the region information of the region 230, the local scanning control unit 170 generates the local scanning control information such that the light detection and ranging unit 11a performs scanning in the second scan mode.

In the next Step S301, the light detection and ranging unit 11a starts scanning (referred to as local scanning) of the region 230 designated by the local scanning control information. On the basis of a measurement result obtained by the local scanning, the point cloud combining unit 140 acquires a composite point cloud frame by, for example, the process described in Step S100 of the flowchart of FIG. 9. Moreover, the 3D object detection unit 141 acquires a localized speed point cloud by the processes described in Steps S101 to S103 of the flowchart.

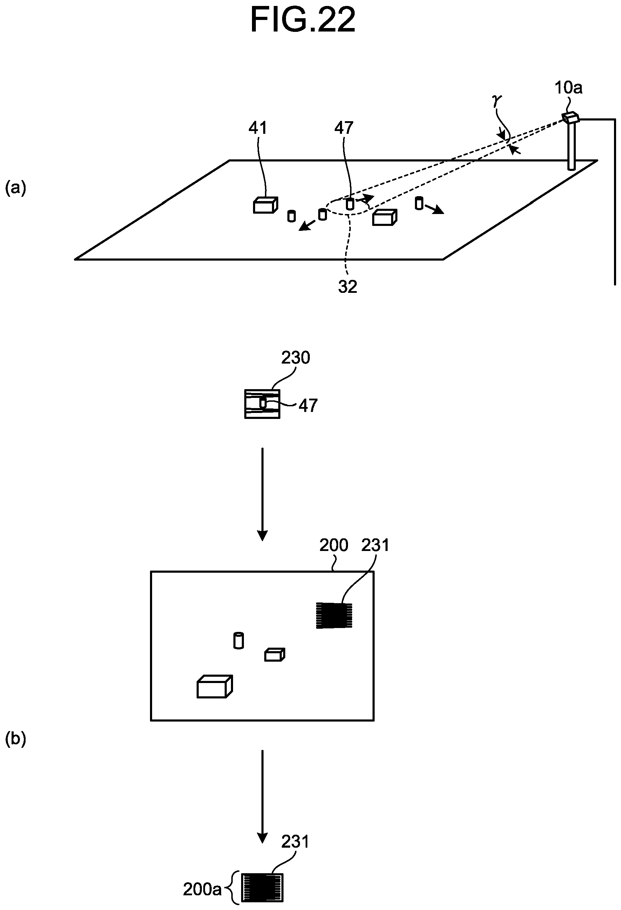

FIG. 22 is a schematic diagram for describing the local scanning according to the second embodiment. As illustrated in Section (a) of FIG. 22, the light detection and ranging unit 11a performs local scanning at the angle γ smaller than the angle α according to the local scanning control information. In this local scanning, as illustrated in Section (b) of FIG. 22, the light detection and ranging unit 11a scans a local scanning region 231 having an angle range 200a corresponding to the region 230 in the angle range 200.

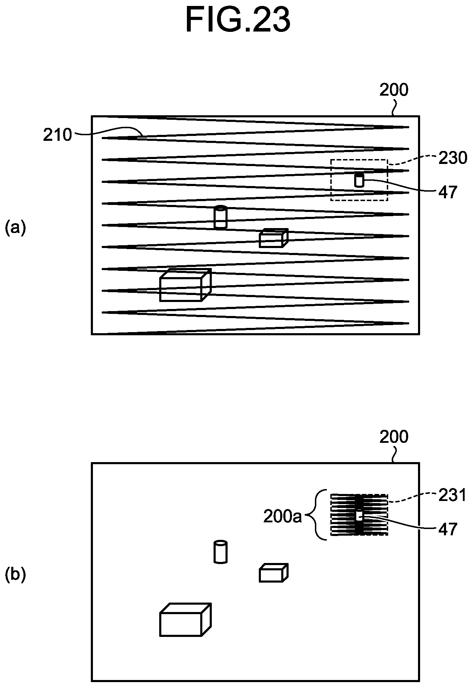

FIG. 23 is a schematic diagram for describing the local scanning according to the second embodiment. Section (a) in FIG. 23 corresponds to FIG. 3 described above, and illustrates a state of full scanning in which the entire angle range 200 is scanned. The light detection and ranging unit 11a scans the inside of the angle range 200 of the angle α according to the scan lines 210 (a first scan pattern). In this example, the region 230 including the moving object 47 is the region of interest.

Section (b) of FIG. 23 is a diagram more specifically illustrating the local scanning on the region 230. The light detection and ranging unit 11a scans the local scanning region 231 that corresponds to the region 230 according to the local scanning control signal supplied from the local scanning control unit 170. This scanning is local scanning on the angle range 200a of the angle γ smaller than the angle α of the angle range 200 with respect to the full scanning on the angle range 200.

At this time, the light detection and ranging unit 11a scans the angle range 200a with the same or substantially the same number of scan lines as the scan lines 210 for the angle range 200 according to the local scanning control information (a second scan pattern). In this case, the second scan pattern has a larger number of scan lines per unit area than the first scan pattern. In other words, in the local scanning according to the second embodiment, scanning is performed on the angle range 200a in the second scan pattern at a higher density than that in the scanning of the angle range 200 in the first scan pattern.

The 3D object detection unit 141 extracts a speed point cloud related to the region of interest on the basis of a measurement result acquired from the local scanning region 231 by the local scanning.

In the next Step S302, the 3D object recognition unit 142 acquires the local speed point cloud from the 3D object detection unit 141. In the next Step S303, the 3D object recognition unit 142 determines whether or not the number of points included in the localized speed point cloud acquired in Step S302 is the second constant or more. In a case where the 3D object recognition unit 142 determines that the number of points is less than the second constant (Step S303, "No"), a series of processes according to the flowchart of FIG. 20 is ended, and the processing is shifted to Step S206 of the flowchart of FIG. 9, for example.

On the other hand, in a case where the 3D object recognition unit 142 determines that the number of points is the second constant or more (Step S303, "Yes"), the processing is shifted to Step S304. In Step S304, the 3D object recognition unit 142 executes object recognition processing on the localized speed point cloud acquired in Step S302.

In the next Step S305, the 3D object recognition unit 142 determines whether or not a certainty factor of a recognition result obtained by the object recognition processing in Step S304 is equal a certain value or more. In a case where the 3D object recognition unit 142 determines that the certainty factor is less than the certain value (Step S305, "No"), the series of processes according to the flowchart of FIG. 20 is ended, and the processing is shifted to Step S206 of the flowchart of FIG. 9, for example. On the other hand, in a case where the 3D object recognition unit 142 determines that the certainty factor is the certain value or more (Step S305, "Yes"), the processing is shifted to Step S306.

In Step S306, the 3D object recognition unit 142 integrates the 3D region information acquired in Step S300 and recognition information indicating a result of the object recognition processing in Step S304.

After the process in Step S306, the processing is shifted to Step S206 of the flowchart of FIG. 9, for example. In this case, in Step S206, instead of 2D region information, the 3D region information integrated with the recognition information may be integrated with time information. Furthermore, 3D attribute information included in the recognition information in the object recognition processing in Step S304 may be acquired in the next Step S207, instead of 2D attribute information.

### (4-1. Modification of Second Embodiment)

Next, a modification of the second embodiment will be described. In the second embodiment described above, the sensing system 1b is configured as the single-angle system in which only one sensor unit 10a is arranged with respect to the space 3 including the target space to be subjected to spatial measurement. On the other hand, in the modification of the second embodiment, a sensing system is configured as a multi-angle system in which the plurality of sensor units 10a is arranged in the space 3.

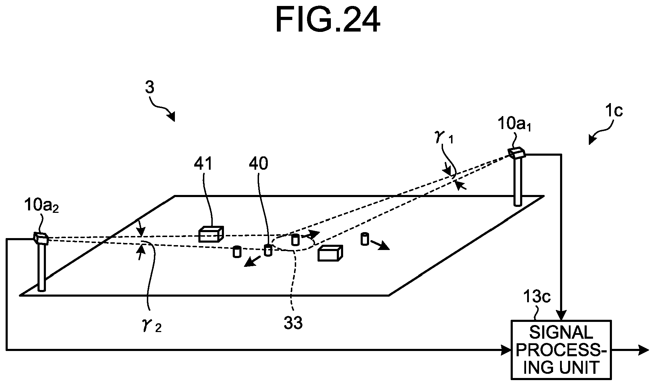

FIG. 24 is a schematic diagram illustrating ROI scanning in a case where the plurality of sensor units is arranged according to the modification of the second embodiment. In FIG. 24, the sensing system 1a includes two sensor units 10a₁ and 10a₂ arranged in the space 3 and a signal processing unit 13c. The sensor units 10a₁ and 10a₂ can scan a target in angle ranges of angles γ₁ and γ₂, respectively, in the second scan mode. In the example of FIG. 24, the sensor units 10a₁ and 10a₂ are arranged at positions opposite to each other with respect to a common region of interest 33, and perform scanning and capturing of the region of interest 33 from different directions.

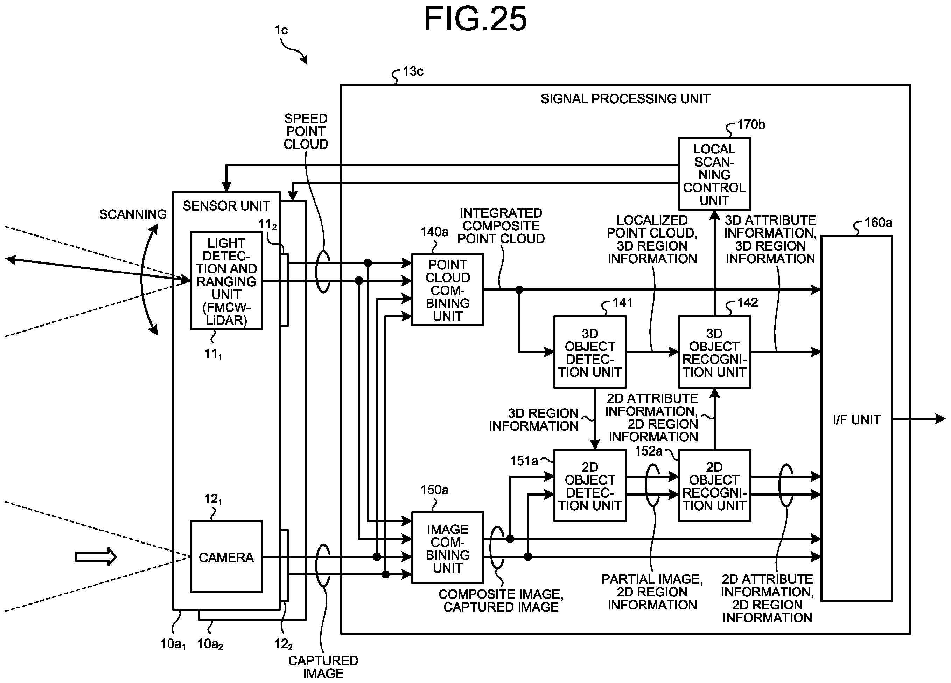

FIG. 25 is a block diagram illustrating a configuration of an example of the sensing system according to the modification of the second embodiment. In FIG. 25, a sensing system 1c includes two sensor units 10a₁ and 10a₂. The sensor unit 10a₁ includes the light detection and ranging unit 11₁ and the camera 12₁. Similarly, the sensor unit 10a₂ includes the light detection and ranging unit 11₂ and the camera 12₂.

The signal processing unit 13c includes the point cloud combining unit 140a, the 3D object detection unit 141, the 3D object recognition unit 142, the image combining unit 150a, the 2D object detection unit 151a, the 2D object recognition unit 152a, and the I/F unit 160a.

The point cloud combining unit 140a acquires a speed point cloud and a captured image respectively output from the light detection and ranging unit 11₁ and the camera 12₁ of the sensor unit 10a₁. Similarly, the point cloud combining unit 140a acquires a speed point cloud and a captured image respectively output from the light detection and ranging unit 11₂ and the camera 12₂ of the sensor unit 10a₂.

On the basis of the angular coordinate of each of the measurement points of each of the speed point clouds, the point cloud combining unit 140a integrates the composite point cloud generated on the basis of the output of the sensor unit 10a₁ and the composite point cloud generated on the basis of the output of the sensor unit 10a₂ to generate an integrated composite point cloud. The composite point clouds may be integrated using the angular coordinates calibrated in advance on the basis of the positional relationship between the light detection and ranging units 11₁ and 11₂ included in the sensor units 10a₁ and 10a₂, respectively.

The point cloud combining unit 140a outputs the generated integrated composite point cloud to the 3D object detection unit 141 and the I/F unit 160. Processes in the 3D object detection unit 141 and the 3D object recognition unit 142 are similar to those in the 3D object detection unit 141 and the 3D object recognition unit 142 according to the modification of the first embodiment described above, and thus, a description thereof will be omitted.

The image combining unit 150a acquires the speed point cloud and the captured image respectively output from the light detection and ranging unit 11₁ and the camera 12₁ of the sensor unit 10a₁. Similarly, the image combining unit 150a acquires the speed point cloud and the captured image respectively output from the light detection and ranging unit 11₂ and the camera 12₂ of the sensor unit 10a₂.

Each of the image combining unit 150a, the 2D object detection unit 151a, and the 2D object recognition unit 152a performs processing on the output of the sensor unit 10a₁ and the output of the sensor unit 10a₂. Processes in the 2D object detection unit 151a and the 2D object recognition unit 152a are similar to those in the 2D object detection unit 151a and the 2D object recognition unit 152a according to the modification of the first embodiment described above, and thus, a description thereof will be omitted here.

The local scanning control unit 170 acquires 3D region information from the 3D object recognition unit 142. The local scanning control unit 170 generates a local scanning control signal on the basis of the 3D region information acquired from the 3D object recognition unit 142, and outputs the local scanning control signal to the light detection and ranging units 11₁ and 11₂.

At this time, it is preferable for the local scanning control unit 170b to set the angle γ₁ at which the light detection and ranging unit 11₁ performs scanning and the angle γ₂ at which the light detection and ranging unit 11₂ performs scanning such that the light detection and ranging units 11₁ and 11₂ scan the common region of interest 32.

Processing by the signal processing unit 13c in the modification of the second embodiment is executed substantially similarly to the processing by the signal processing unit 13b according to the second embodiment described with reference to the flowchart of FIG. 20. In this case, processes in and after Step S302 may be performed on an integrated local speed point cloud obtained by integrating a local speed point cloud based on the output of the sensor unit 10a₂ and a local speed point cloud based on the output of the sensor unit 10a₂.

Furthermore, the processing according to the flowchart of FIG. 20 may be started immediately before the process in Step S206 of the flowchart of FIG. 9 as in to the second embodiment. In this case, the processing may be started in a case where the 2D object detection unit 151a determines that a luminance value of a partial image is not sufficient or in a case where the 2D object recognition unit 152 determines that a certainty factor is less than a certain value. Alternatively, when the recognition result of the partial image corresponding to the region where the movement has been detected from the speed point cloud is a preset target object and it is determined that more detailed three-dimensional movement analysis for the target object is necessary, the processing according to the flowchart of FIG. 20 may be executed. Furthermore, the partial image corresponding to the region where the movement has been detected from the speed point cloud may be presented to a user, and the processing according to the flowchart of FIG. 20 may be executed in response to a request for detailed analysis or the like by the user in response to the presentation.

Since the ROI scanning and the multi-angle system are combined according to the modification of the second embodiment, it is possible to locally increase the number of measurement points with respect to the target object while reducing influence of shielding even under an environmental condition where the shielding is likely to occur. Accordingly, the target object can be recognized with higher accuracy.

### [5. Third Embodiment]

Next, a third embodiment of the present disclosure will be described. The third embodiment is an example in which the sensing system according to the present disclosure is applied to a people flow analysis system that analyzes people flow.

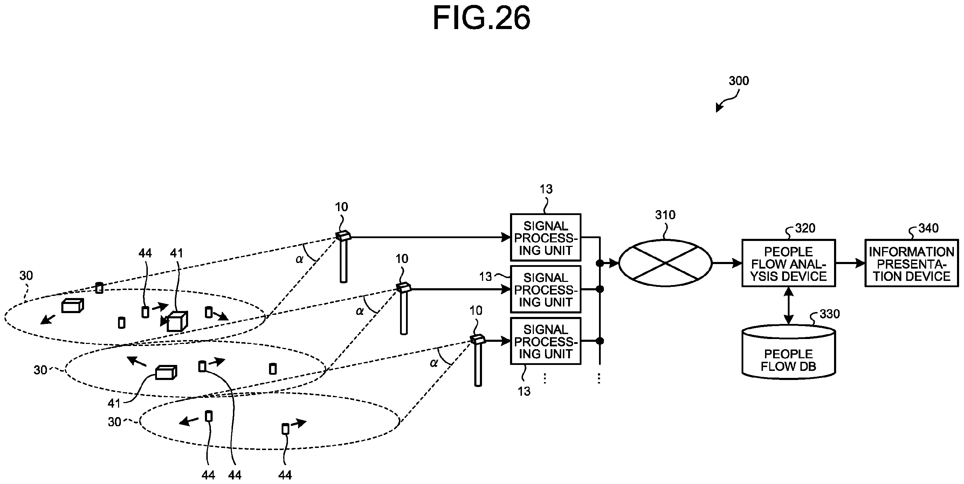

FIG. 26 is a diagram schematically illustrating a configuration of an example of the people flow analysis system according to the third embodiment. In FIG. 26, a people flow analysis system 300 includes a plurality of the sensing systems 1 each including the sensor unit 10 and the signal processing unit 13, a people flow analysis device 320, a people flow database (DB) 330, and an information presentation device 340.

Each of the signal processing units 13 is connected to the people flow analysis device 320 via a network 310 such as a local area network (LAN) or the Internet. Without being limited thereto, each of the signal processing units 13 may be directly connected to the people flow analysis device 320 without the intervention of the network 310 or the like.

Each of the signal processing units 13 executes, for example, the processing according to the flowchart of FIG. 9 in the first embodiment described above on the basis of a measurement result and a captured image, which are obtained by each of the sensor units 10, and periodically acquires time information, 2D and 3D region information, and 2D and 3D attribute information. The time information, the 2D and 3D region information, and the 2D and 3D attribute information are transmitted to the people flow analysis device 320 via the network 310.

The people flow analysis device 320 detects and recognizes a person 44, which is a measurement target of each of the sensor units 10 and included in each of the target ranges 30, on the basis of the time information, the 2D and 3D region information, and the 2D and 3D attribute information, which are transmitted from each of the signal processing units 13, and information stored in the people flow DB 330. The people flow analysis device 320 analyzes people flow, which is flow of the persons 44 in the respective target ranges 30, on the basis of detection and recognition results of the persons 44. The people flow analysis device 320 sends an analysis result of the people flow by the people flow analysis device 320 to the information presentation device 340.

For example, the information presentation device 340 can employ a general computer device, and presents the analysis result of the people flow sent from the people flow analysis device 320 to a user as visualized information.

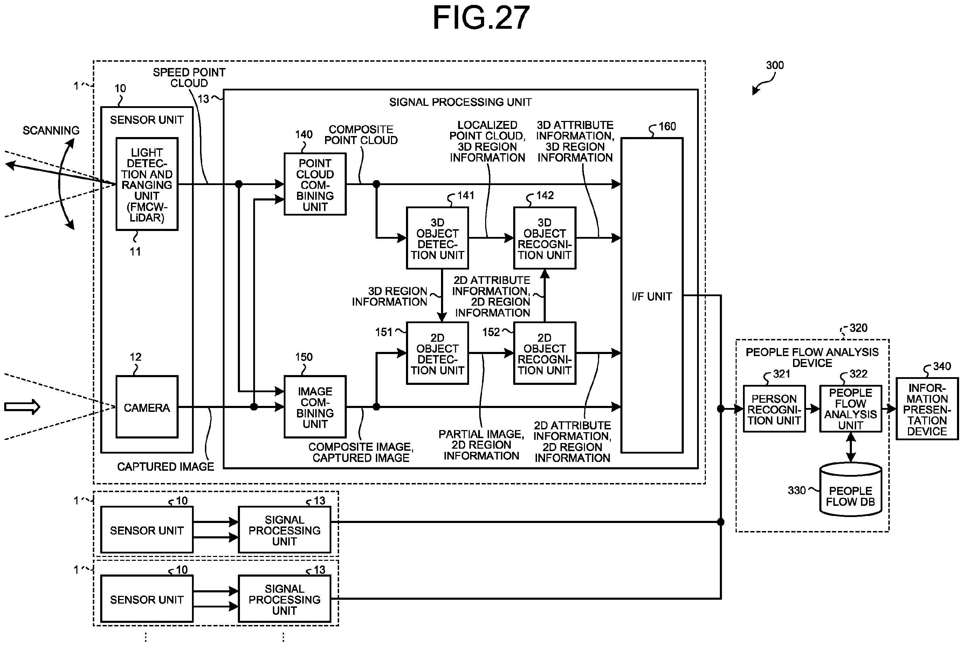

FIG. 27 is a block diagram illustrating a configuration of an example of the people flow analysis system 300 according to the third embodiment in more detail.

The people flow analysis system 300 includes one or more sensing systems each including the sensor unit 10 and the signal processing unit 13. Configurations of each of the sensor units 10 and each of the signal processing units 13 are equivalent to, for example, those of the sensor unit 10 and the signal processing unit 13 described with reference to FIG. 4, and thus, a description thereof will be omitted here. Each of the sensing systems 1 performs measurement and capturing at a predetermined cycle, for example, and outputs time information, 2D and 3D region information, and 2D and 3D attribute information. The time information, the 2D and 3D region information, and the 2D and 3D attribute information output from each of the signal processing units 13 are transmitted to the people flow analysis device 320 via the network 310 (not illustrated).

The people flow analysis device 320 includes a person recognition unit 321, a people flow analysis unit 322, and the people flow DB 330.

The person recognition unit 321 periodically acquires the time information, the 2D and 3D region information, and the 2D and 3D attribute information via the network 310. The person recognition unit 321 estimates the time at which the person 44 has been measured and captured in the target range 30 and a position, a posture, and a moving speed of the person 44 on the basis of the acquired time information, 2D and 3D region information, and 2D and 3D attribute information. As a result, the person recognition unit 321 can recognize a person who is moving in the target range 30. Hereinafter, these time, position, posture, and moving speed related to the person 44 will be collectively referred to as people flow information.

Furthermore, the person recognition unit 321 identifies the person 44 commonly detected in each of the target ranges 30 among the persons 44 detected from the respective target ranges 30 on the basis of pieces of the time information, 2D and 3D region information, and 2D and 3D attribute information acquired from the plurality of sensor units 10.

The person recognition unit 321 integrate and output pieces of the people flow information regarding one or more persons 44 acquired from the plurality of sensing systems 1. The people flow analysis unit 322 registers the integrated people flow information output from the person recognition unit 321 in the people flow DB 330 as time-series data. Furthermore, the people flow analysis unit 322 performs statistical analysis on the people flow information as the time-series data, and acquires statistical analysis information such as a period of time of stay during which the persons 44 stay at one place and the degree of congestion in the target range 30, for example. The people flow analysis unit 322 outputs the people flow information and the statistical analysis information to the information presentation device 340.

The information presentation device 340 acquires the people flow information and the statistical analysis information output from the people flow analysis unit 322. Here, it is assumed that the information presentation device 340 has, in advance, a map of each of the target ranges 30 to be subjected to measurement and capturing by each of the sensor units 10. The information presentation device 340 displays the map on a display device, and displays movement trajectories of the persons 44 to be superimposed on the map on the basis of the acquired people flow information. The information presentation device 340 may display the statistical analysis information on the display device together with the movement trajectories of the persons 44.

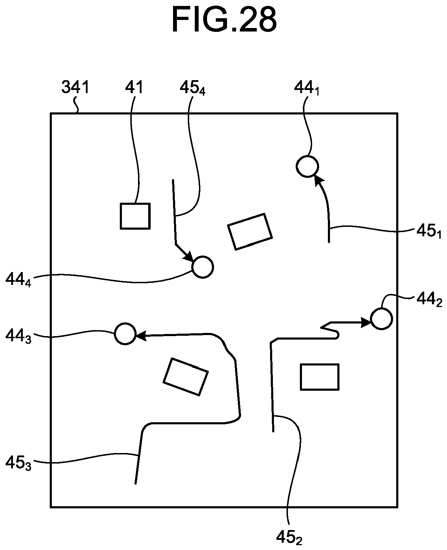

FIG. 28 is a diagram schematically illustrating an example of the people flow displayed on the display device by the information presentation device 340. In FIG. 28, a map 341 including static objects 41 disposed in the respective target ranges 30 is displayed on the display device. The information presentation device 340 displays persons 44₁ to 44₄ and trajectories 45₁ to 45₄ along which the persons 44₁ to 44₄ have moved, respectively, to be superimposed on the map 341. The user can grasp the people flow in the respective target ranges 30 by observing the map 341.

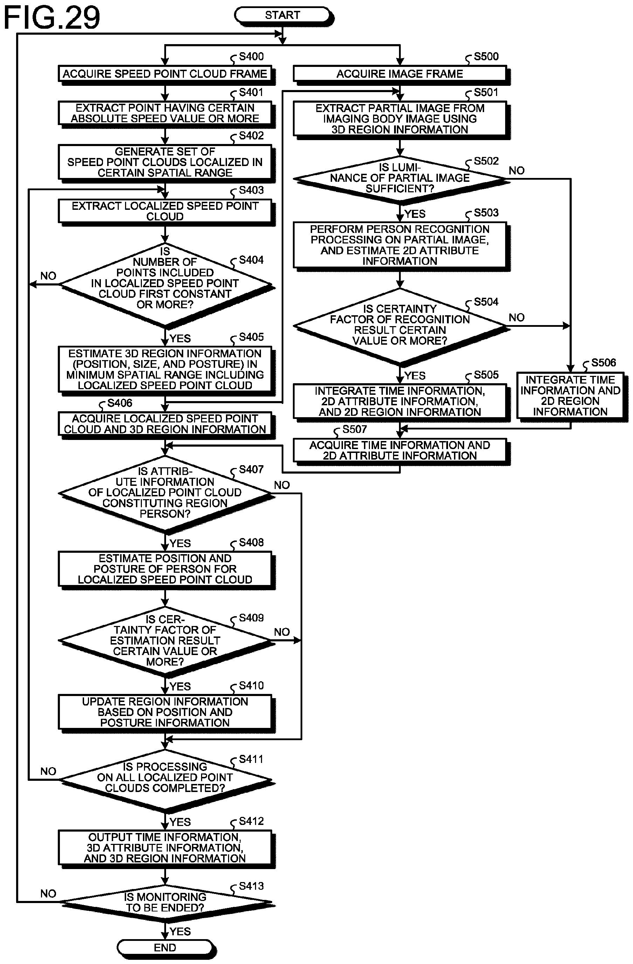

FIG. 29 is a flowchart illustrating an example of processing by the people flow analysis system 300 according to the third embodiment. Note that a description will be given while appropriately omitting a process in FIG. 29 common to that in the above-described flowchart of FIG. 9.

Each process illustrated in FIG. 29 is executed by each unit in each of the signal processing units 13 included in the people flow analysis system 300. More specifically, processes in Steps S400 to S413 illustrated on the left side in FIG. 29 correspond to processing related to 3D data mainly executed by the point cloud combining unit 140, the 3D object detection unit 141, and the 3D object recognition unit 142. Furthermore, processes in Steps S500 to S507 illustrated on the right side correspond to processing related to 2D data mainly executed by the image combining unit 150, the 2D object detection unit 151, and the 2D object recognition unit 152.

In FIG. 29, the processes in Steps S400 to S406 are similar to the processes in Steps S100 to S106 in FIG. 9. That is, in Step S400, the point cloud combining unit 140 acquires a speed point cloud frame on the basis of a speed point cloud measured by scanning within the angle range 200 performed by the light detection and ranging unit 11.

In the next Step S401, the 3D object detection unit 141 extracts points having a certain absolute speed value or more from the speed point cloud frame generated in Step S400. In the next Step S402, the 3D object detection unit 141 generates a set of speed point clouds (localized speed point clouds) localized in a certain spatial range among the points extracted in Step S401.

In the next Step S403, the 3D object detection unit 141 extracts one localized speed point cloud as a target to be processed, from the localized speed point clouds generated in Step S402. In the next Step S404, the signal processing unit 13 causes the 3D object detection unit 141 to determine whether or not the number of points included in the extracted localized speed point cloud is a first constant or more. When determining that the number of points is less than the first constant (Step S404, "No"), the 3D object detection unit 141 returns the processing to Step S403, extracts a next localized speed point cloud from the localized speed point clouds generated in Step S402, and continues the processing.

When the 3D object detection unit 141 determines that the number of points is the first constant or more (Step S404, "Yes"), the processing is shifted to Step S405. In Step S405, the 3D object detection unit 141 acquires 3D region information on the basis of the localized speed point cloud as the target.

When the 3D region information is acquired in Step S505, the 3D object detection unit 141 shifts the processing to Step S406 and sends the 3D region information to the 2D object detection unit 151 for the process in Step S501 to be described later. In Step S406, the 3D object recognition unit 142 acquires the localized speed point cloud and the 3D region information from the 3D object detection unit 141. After the process in Step S406, the processing is shifted to Step S407 to be described later.

On the other hand, the process in Step S500 is executed in parallel with the process of acquiring a composite image frame in Step S400 described above. In Step S500, the image combining unit 150 generates a composite image frame on the basis of the speed point cloud acquired by scanning within the angle range 200 performed by the light detection and ranging unit 11 and the captured image acquired by the camera 12.

Note that the processes in Steps S500 to S507 are the same as the processes in Steps S200 to S207 of the flowchart of FIG. 9. That is, in Step S501, the 2D object detection unit 151 acquires the 3D region information estimated by the 3D object detection unit 141 in Step S405 described above. The 2D object detection unit 151 extracts a partial image from the entire image using the acquired 3D region information.

In the next Step S502, the 2D object detection unit 151 determines whether or not luminance of the partial image acquired in Step S501 is sufficient. In a case where the 2D object detection unit 151 determines that a luminance value of the partial image is not sufficient (Step S502, "No"), the processing is shifted to Step S506. On the other hand, in a case where the 2D object detection unit 151 determines that the luminance value of the partial image is sufficient (Step S502, "Yes"), the processing is shifted to Step S503.

In Step S503, the 2D object recognition unit 152 acquires a partial image from the 2D object detection unit 151, and executes recognition processing on the acquired partial image. The 2D object recognition unit 152 estimates 2D attribute information on the basis of a result of the recognition processing.

In the next Step S504, the 2D object recognition unit 152 determines whether or not a certainty factor of the recognition result in Step S503 is a certain value or more. In a case where the 2D object recognition unit 152 determines that the certainty factor is less than the certain value (Step S504, "No"), the processing is shifted to Step S506. On the other hand, in a case where the 2D object recognition unit 152 determines that the certainty factor is the certain value or more (Step S504, "Yes"), the processing is shifted to Step S505.

In Step S505, the 3D object recognition unit 142 outputs time information indicating the time at which the captured image has been captured, the 2D attribute information, and 2D region information to the I/F unit 160 in an integrated manner.

Meanwhile, as described above, the processing is shifted to Step S506 in the case where it is determined in Step S502 that the luminance of the partial image is not sufficient (Step S502, "No") or in the case where it is determined in Step S504 that the certainty factor is less than the certain value (Step S504, "No"). In Step S506, the 2D object recognition unit 152 outputs the time information and the 2D region information to the I/F unit 160 in an integrated manner.

After the process in Step S505 or Step S506, the processing is shifted to Step S507. In Step S507, the 2D object recognition unit 152 acquires the integrated time information and 2D attribute information, and outputs the acquired information to the 3D object recognition unit 142.

Returning to the description of the processing on the left side of FIG. 29, in transition from Step S406 to Step S407, the 3D object recognition unit 142 acquires the time information and the 2D attribute information output from the 2D object recognition unit 152 in Step S507.

In Step S407, the 3D object recognition unit 142 determines whether or not the 2D attribute information, which corresponds to the localized speed point cloud constituting the 3D region information acquired in Step S406, indicates a person. In a case where the 3D object recognition unit 142 determines that the 2D attribute information does not indicate a person (Step S407, "No"), the processing is shifted to Step S411. On the other hand, in a case where the 3D object recognition unit 142 determines that the 2D attribute information indicates a person (Step S407, "Yes"), the processing is shifted to Step S408.

In Step S408, the 3D object recognition unit 142 estimates a position and a posture of the person with respect to the localized speed point cloud as the target. In the next Step S409, the 3D object recognition unit 142 determines whether or not a certainty factor of the position and posture estimated in Step S408 is equal a certain value or more. In a case where the 3D object recognition unit 142 determines that the certainty factor is less than the certain value (Step S409, "No"), the processing is shifted to Step S411. On the other hand, in a case where the 3D object recognition unit 142 determines that the certainty factor is the certain value or more (Step S409, "Yes"), the processing is shifted to Step S410.

In Step S410, the 3D object recognition unit 142 updates the corresponding 3D region information on the basis of the position and posture estimated in Step S408.

In the next Step S411, the 3D object recognition unit 142 determines whether or not processing for all the localized speed point clouds generated in Step S403 has been completed. When determining that the processing for all the generated localized speed point clouds has not been completed (Step S411, "No"), the signal processing unit 13 returns the processing to Step S403, extracts the next localized speed point cloud from the localized speed point clouds generated in Step S402, and continues the processing.

On the other hand, when the 3D object recognition unit 142 determines that the processing for all the generated localized speed point clouds has been completed (Step S411, "Yes"), the processing is shifted to Step S412. In Step S412, the 3D object recognition unit 142 outputs the time information, the 3D attribute information, and the 3D region information to the I/F unit 160 for all the generated localized speed point clouds.

In the next Step S413, the signal processing unit 13 determines whether or not a monitoring operation by the people flow analysis system 300 has ended. When determining that the monitoring operation has not ended (Step S413, "No"), the signal processing unit 13 shifts the processing to Steps S400 and S500, and acquires the next speed point cloud frame and image frame.

On the other hand, when determining that the monitoring operation by the people flow analysis system 300 has ended (Step S413, "Yes"), the signal processing unit 13 ends a series of the processes according to the flowchart in FIG. 29.

In this manner, the people flow analysis system 300 according to the third embodiment detects and recognizes the person 44 in the target range 30 on the basis of the point cloud acquired from the measurement result of the light detection and ranging unit 11 and the captured image captured by the camera 12. Therefore, the people flow analysis can be executed with higher accuracy.

Note that a single-angle system in which one sensor unit 10 is arranged in each of the target ranges 30 is applied in the people flow analysis system 300, but this is not limited to this example. For example, a multi-angle system described using the modification of the first embodiment may be applied to the people flow analysis system 300 according to the third embodiment.

### [6. Fourth Embodiment]

Next, a fourth embodiment of the present disclosure will be described. The fourth embodiment is an example in which the sensing system according to the present disclosure is applied to an abnormality detection system that detects an abnormality in a target range.

Many of abnormal events physically involve a change in a position. Examples of such an abnormal event include falling or suspicious behavior of a person, an abnormal start or a sudden stop of a vehicle, and the like. It is assumed that a sort of speed is generated in these events. Therefore, it is considered that an abnormality can be detected by monitoring the surroundings of a point where the speed is generated.

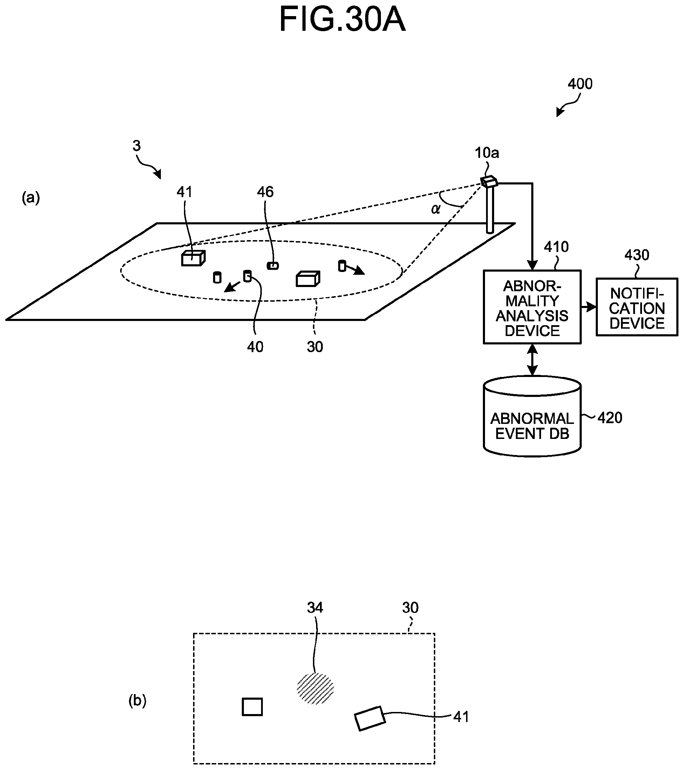

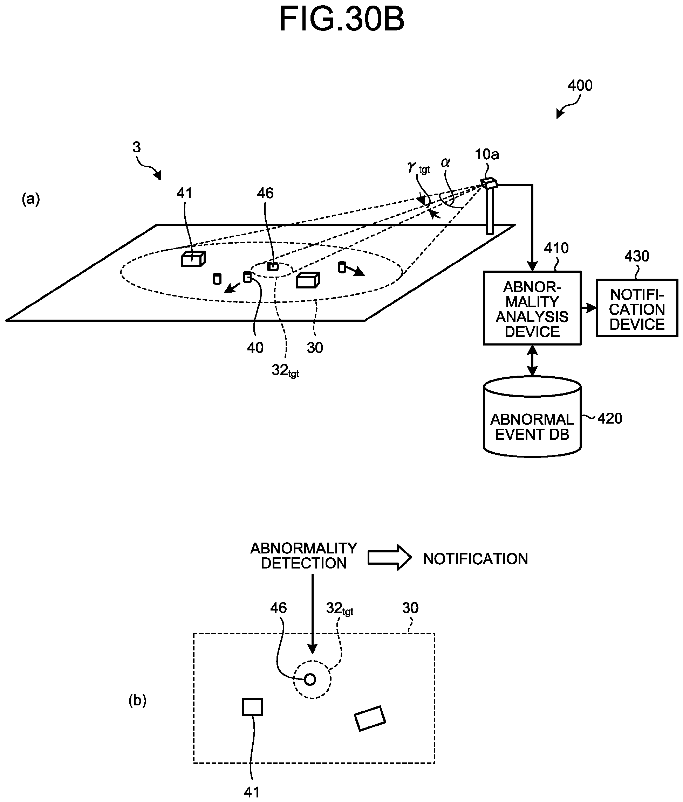

FIGS. 30A and 30B are schematic diagrams for describing the abnormality detection system according to the fourth embodiment. FIG. 30A illustrates a state of a normal operation. Furthermore, FIG. 30B illustrates a state of a local abnormality detection operation after detection of an abnormality. In the fourth embodiment, the sensing system 1b that performs local scanning, described with reference to FIGS. 18 to 23 in the second embodiment, is applied as a sensing system used by the abnormality detection system.

In FIG. 30A, Section (a) illustrates a configuration of an example of a case where the above is not detected in an abnormality detection system 400 according to the third embodiment. The abnormality detection system 400 includes the sensor unit 10a, the signal processing unit 13b (not illustrated), an abnormality analysis device 410, an abnormal event database (DB) 420, and a notification device 430.

In the example of Section (a) of FIG. 30A, one sensor unit 10a is arranged in the space 3, and a measurement result and a captured image, which are obtained by the sensor unit 10a, are input to the signal processing unit 13b (not illustrated). Furthermore, a local scanning control signal is supplied from the signal processing unit 13b to the sensor unit 10a although not illustrated.

Note that a single-angle system in which one sensor unit 10a is arranged in the space 3 is applied to the abnormality detection system 400 in this example, but this is not limited to this example. For example, a multi-angle system in which a plurality of sensor units is arranged with respect to the space 3 may be applied to the abnormality detection system 400. Furthermore, the sensor unit 10a (signal processing unit 13b) and the abnormality analysis device 410 are illustrated to be directly connected in this example, but this is not limited to this example. For example, the sensor unit 10a (signal processing unit 13b) and the abnormality analysis device 410 may be connected via a network such as a local area network (LAN) or the Internet.

In the sensor unit 10a, the light detection and ranging unit 11a scans the target range 30 in an angle range of the angle α in a first scan mode to perform measurement, and captures an image of a range including the target range 30 by the camera 12.

The signal processing unit 13b (not illustrated) executes, for example, the processing according to the flowchart of FIG. 9 in the first embodiment described above on the basis of a result of the measurement and the captured image, which are obtained by the sensor unit 10a, and periodically acquires time information, 2D and 3D region information, and 2D and 3D attribute information. The signal processing unit 13b outputs the time information, the 2D and 3D region information, and the 2D and 3D attribute information.

Here, it is assumed that a movement estimated to be abnormal on the basis of results of measurement and capturing by the sensor unit 10a is detected from an object 46. As illustrated in Section (b) of FIG. 30A, it is assumed that object 46 exists in a region 34 in the target range 30.

When a movement estimated to be abnormal is detected, the signal processing unit 13b shifts a scan mode of the light detection and ranging unit 11a in the sensor unit 10a from the first scan mode to a second scan mode, and generates a local scanning control signal for controlling the sensor unit 10a to perform local scanning in accordance with the region 34 in which the movement has been detected. According to the local scanning control signal, the sensor unit 10a causes the light detection and ranging unit 11a to scan a region of interest 32_{tgt}, which is a region corresponding to the region 34, using an angle γ_{tgt} that has a narrower angle range than the angle α and corresponds to the region 34.

With this local scanning, it is possible to detect the abnormality of the object 46 in more detail.

The abnormality analysis device 410 acquires the time information, the 2D and 3D region information, and the 2D and 3D attribute information output from the signal processing unit 13b. The time information indicates the time at which the abnormality has been detected, and the 2D and 3D region information indicate the region where the abnormality has been detected. Furthermore, the 2D and 3D attribute information are attribute information of the object 46 from which the abnormality has been detected.

The abnormality analysis device 410 detects the abnormality occurring in the target range 30 on the basis of the acquired time information, 2D and 3D region information, and 2D and 3D attribute information, and information stored in the abnormal event DB 420. When the abnormality is detected in the target range 30, the abnormality analysis device 410 transmits abnormality detection information indicating the detection of the abnormality to the notification device 430. The notification device 430 notifies a user or the like of occurrence of the abnormality according to the abnormality detection information.

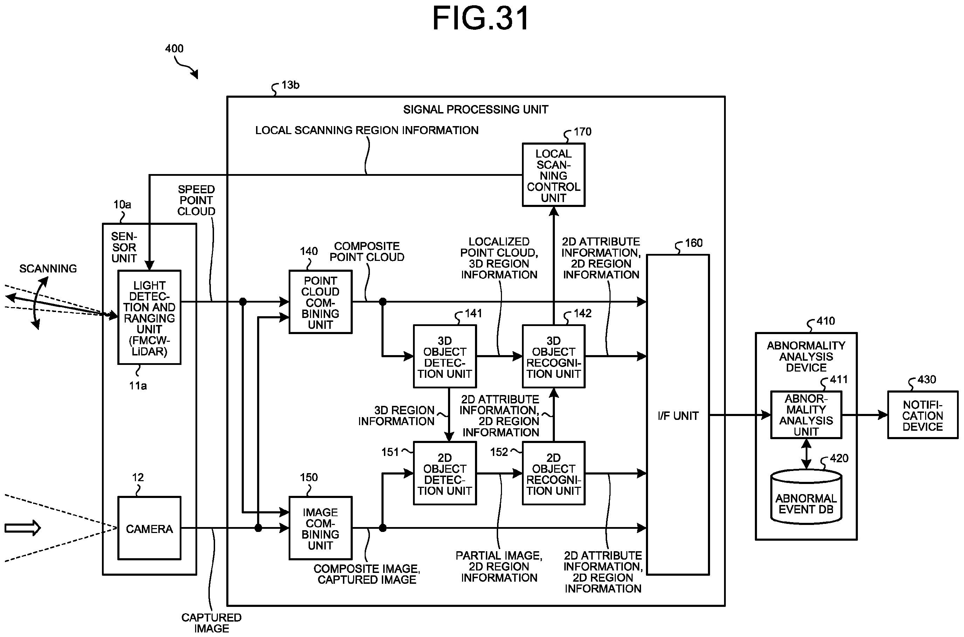

FIG. 31 is a block diagram illustrating a configuration of an example of the abnormality detection system 400 according to the fourth embodiment in more detail.

The abnormality detection system 400 includes the sensing system 1b including the sensor unit 10a and the signal processing unit 13b. A configuration of the sensing system 1b according to the fourth embodiment is equivalent to that of the sensing system 1b described with reference to FIG. 19, and thus, a description thereof will be omitted here. The sensing system 1b performs measurement and capturing at a predetermined cycle, for example, and outputs time information, 2D and 3D region information, and 2D and 3D attribute information.

The abnormality analysis device 410 includes an abnormality analysis unit 411 and the abnormal event database (DB) 420. The abnormality analysis unit 411 acquires the time information, the 2D and 3D region information, and the 2D and 3D attribute information output from the signal processing unit 13b. The abnormality analysis unit 411 identifies an occurrence position of an abnormal event on the basis of the 2D region information and the 3D region information. The abnormality analysis unit 411 extracts a partial image and a partial point cloud around the occurrence position of the abnormal event from the 2D region information and the 3D region information on the basis of the identified occurrence position of the abnormal event.

The abnormality analysis unit 411 registers a content (attribute), the occurrence position, the partial image, and the partial point cloud related to the abnormal event in the abnormal event DB 420. Furthermore, the abnormality analysis unit 411 also refers to information registered in the abnormal event DB 420 to analyze a content, duration, and the like of the abnormal event. The abnormality analysis unit 411 determines importance of the abnormal event on the basis of a result of the analysis, and outputs a notification command to the notification device 430 when a notification is required on the basis of a result of the determination.

The notification device 430 outputs a notification indicating the occurrence of the abnormal event in response to the notification command output from the abnormality analysis unit 411. The notification device 430 may output this notification as visual information, sound information, or a combination thereof. Without being limited thereto, the notification device 430 may output the notification to another device.

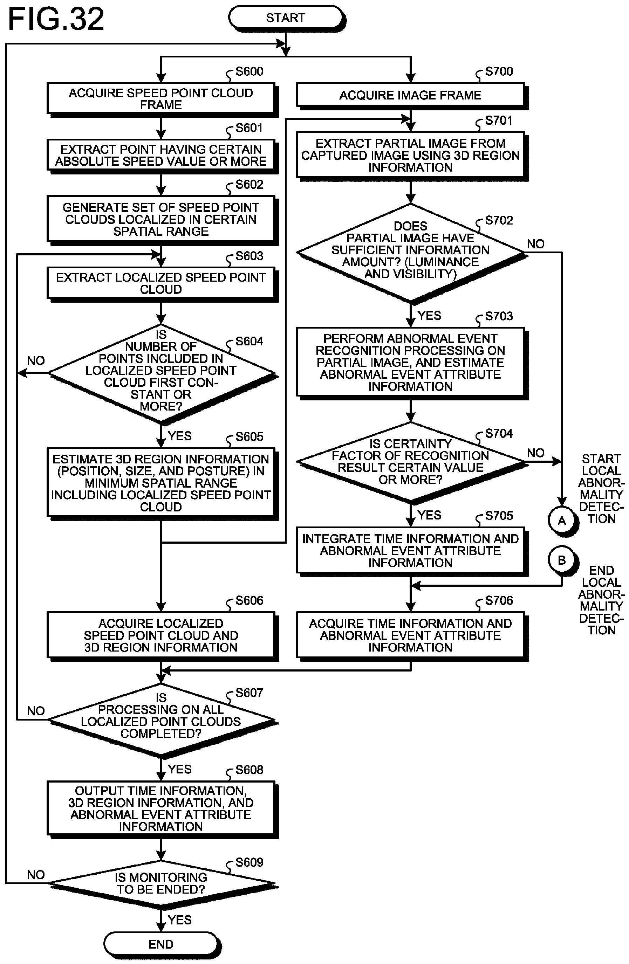

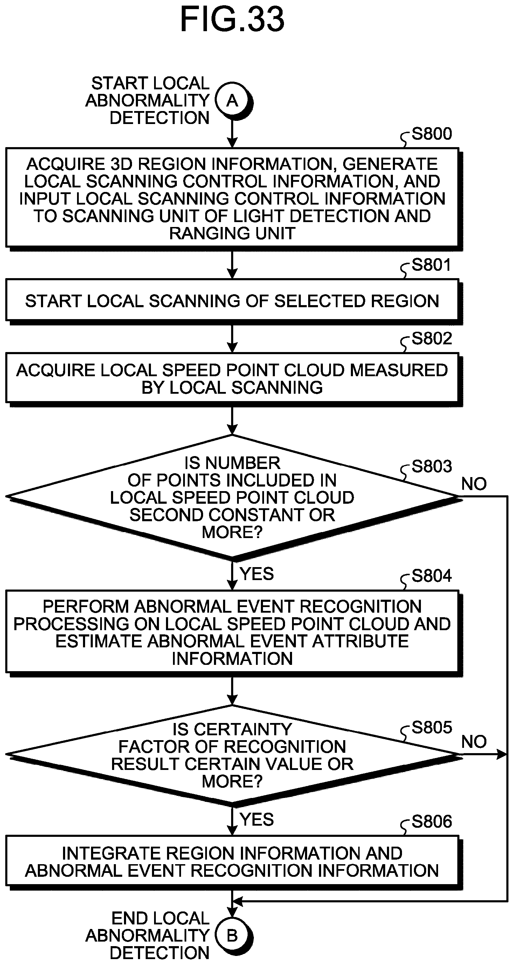

FIGS. 32 and 33 are flowcharts of an example illustrating processing by the abnormality detection system according to the fourth embodiment. Note that reference signs "A" and "B" in FIGS. 32 and 33 indicate that the processing is shifted to corresponding reference signs between FIGS. 32 and 33. Note that a description will be given while appropriately omitting a process in FIG. 32 common to that in the above-described flowchart of FIG. 9.

Each process illustrated in FIG. 32 is executed by each unit in the signal processing unit 13b included in the abnormality detection system 400. More specifically, processes in Steps S600 to S609 illustrated on the left side in FIG. 32 correspond to processing related to 3D data mainly executed by the point cloud combining unit 140, the 3D object detection unit 141, and the 3D object recognition unit 142. Furthermore, Steps S700 to S706 illustrated on the right side correspond to processing related to 2D data mainly executed by the image combining unit 150, the 2D object detection unit 151, and the 2D object recognition unit 152.

In FIG. 32, the processes in Steps S600 to S606 are similar to the processes in Steps S100 to S106 in FIG. 9. That is, in Step S600, the point cloud combining unit 140 acquires a speed point cloud frame on the basis of a speed point cloud measured by scanning within the angle range 200 in the first scan mode of the light detection and ranging unit 11.

In the next Step S601, the 3D object detection unit 141 extracts points having a certain absolute speed value or more from the speed point cloud frame generated in Step S600. In the next Step S602, the 3D object detection unit 141 generates a set of speed point clouds (localized speed point clouds) localized in a certain spatial range among the points extracted in Step S601.

In the next Step S603, the 3D object detection unit 141 extracts one localized speed point cloud as a target to be processed, from the localized speed point clouds generated in Step S602. In the next Step S604, the signal processing unit 13 causes the 3D object detection unit 141 to determine whether or not the number of points included in the extracted localized speed point cloud is a first constant or more. When determining that the number of points is less than the first constant (Step S604, "No"), the 3D object detection unit 141 returns the processing to Step S603, extracts a next localized speed point cloud from the localized speed point clouds generated in Step S602, and continues the processing.

When the 3D object detection unit 141 determines that the number of points is the first constant or more (Step S604, "Yes"), the processing is shifted to Step S605. In Step S605, the 3D object detection unit 141 estimates region information (a position, a size, and a posture) of, for example, the minimum region including the localized speed point cloud as the target, and acquires 3D region information.

When the 3D region information is acquired in Step S505, the 3D object detection unit 141 shifts the processing to Step S606 and sends the 3D region information to the 2D object detection unit 151 for the process in Step S701 to be described later. In Step S606, the 3D object recognition unit 142 acquires the localized speed point cloud and the 3D region information from the 3D object detection unit 141. After the process in Step S606, the processing is shifted to Step S607 to be described later.

On the other hand, the process in Step S700 is executed in parallel with the process of acquiring a composite image frame in Step S600 described above. In Step S700, the image combining unit 150 generates a composite image frame on the basis of the speed point cloud acquired by scanning within the angle range 200 performed by the light detection and ranging unit 11 and the captured image acquired by the camera 12.

In Step S701, the 2D object detection unit 151 acquires the 3D region information estimated by the 3D object detection unit 141 in Step S605 described above. The 2D object detection unit 151 extracts a partial image from the entire captured image using the acquired 3D region information.

In the next Step S702, the 2D object detection unit 151 determines whether or not the partial image acquired in Step S701 has a sufficient amount of information. For example, the 2D object detection unit 151 determines the amount of information by comparing luminance or visibility of the partial image with a threshold. It is conceivable to acquire the visibility by, for example, edge detection with respect to the partial image.

In a case where the 2D object detection unit 151 determines that the amount of information of the partial image is not sufficient (Step S702, "No"), the processing is shifted to Step S800 in FIG. 33. On the other hand, in a case where the 2D object detection unit 151 determines that the amount of information of the partial image is sufficient (Step S702, "Yes"), the processing is shifted to Step S703.

In Step S703, the 2D object recognition unit 152 acquires a partial image from the 2D object detection unit 151, and executes abnormal event recognition processing of recognizing an abnormal event on the acquired partial image. The 2D object recognition unit 152 estimates abnormal event attribute information, which is an attribute related to the abnormal event, on the basis of a result of the abnormal event recognizing processing. As the abnormal event attribute information, for example, a type, an entity (person or the like), a scale, and the like of the abnormal event can be applied.

For example, the 2D object recognition unit 152 may perform learning based on the recognition result of the abnormal event and generate a learning model for recognizing an abnormal event by this learning. Without being limited thereto, the 2D object recognition unit 152 may recognize an abnormal event from a partial image using an existing learning model.

In the next Step S704, the 2D object recognition unit 152 determines whether or not a certainty factor of the recognition result obtained by the abnormal event recognition processing in Step S703 is a certain value or more. In a case where the 2D object recognition unit 152 determines that the certainty factor is less than the certain value (Step S704, "No"), the processing is shifted to Step S800 of the flowchart of FIG. 33. On the other hand, in a case where the 2D object recognition unit 152 determines that the certainty factor is the certain value or more (Step S704, "Yes"), the processing is shifted to Step S705.

In Step S705, the 3D object recognition unit 142 outputs time information indicating the time at which the captured image has been captured and the abnormal event attribute information to the I/F unit 160 in an integrated manner.

On the other hand, the processing is shifted to Step S800 of FIG. 33 in the case where it is determined in Step S702 that the amount of information of the partial image is not sufficient (Step S702, "No"), or in the case where it is determined in Step S704 that the certainty factor is less than the certain value (Step S704, "No") as described above.

After the process in Step S705 or Step S806 of the flowchart of FIG. 33, which will be described later, the processing is shifted to Step S706. In Step S706, the 2D object recognition unit 152 acquires the integrated time information and abnormal event attribute information, and outputs the acquired information to the 3D object recognition unit 142.

Returning to the description of the processing on the left side of FIG. 32, in transition from Step S606 to Step S607, the 3D object recognition unit 142 acquires the time information and the abnormal event attribute information output from the 2D object recognition unit 152 in Step S706.

In the Step S607, the 3D object recognition unit 142 determines whether or not processing for all the localized speed point clouds generated in Step S602 has been completed. When determining that the processing for all the generated localized speed point clouds has not been completed (Step S607, "No"), the signal processing unit 13 returns the processing to Step S603, extracts the next localized speed point cloud from the localized speed point clouds generated in Step S602, and continues the processing.

On the other hand, when the 3D object recognition unit 142 determines that the processing for all the generated localized speed point clouds has been completed (Step S607, "Yes"), the processing is shifted to Step S608. In Step S608, the 3D object recognition unit 142 outputs the time information and the abnormal event attribute information to the I/F unit 160 for all the generated localized speed point clouds.

In the next Step S609, the signal processing unit 13b determines whether or not a monitoring operation by the abnormality detection system 400 has ended. When determining that the monitoring operation has not ended (Step S609, "No"), the signal processing unit 13b shifts the processing to Steps S600 and S700, and acquires the next speed point cloud frame and image frame.

On the other hand, when determining that the monitoring operation by the abnormality detection system 400 has ended (Step S609, "Yes"), the signal processing unit 13b ends a series of the processes according to the flowchart of FIG. 32.

The processing according to the flowchart of FIG. 33 will be described. Note that a description will be given while appropriately omitting a process in the flowchart of FIG. 33 common to that in the above-described flowchart of FIG. 20.

In FIG. 33, in Step S800, the local scanning control unit 170 acquires 3D region information as a region of interest from the 3D object recognition unit 142, and generates local scanning control information on the basis of the acquired 3D region information. The local scanning control unit 170 inputs the generated local scanning control information to the scanning unit 100 of the light detection and ranging unit 11a.

In the next Step S801, a scan mode of the light detection and ranging unit 11a is shifted from the first scan mode to the second scan mode, and local scanning for the region of interest 32_{tgt} designated by the local scanning control information is started. On the basis of a measurement result obtained by the local scanning, the point cloud combining unit 140 acquires a composite point cloud frame by, for example, the process described in Step S100 of the flowchart of FIG. 9. Moreover, the 3D object detection unit 141 acquires a localized speed point cloud by the processes described in Steps S101 to S103 of the flowchart.

The 3D object detection unit 141 extracts a local speed point cloud related to the region of interest 32_{tgt} on the basis of the measurement result acquired from the region of interest 32_{tgt} by the local scanning.

In the next Step S802, the 3D object recognition unit 142 acquires the local speed point cloud from the 3D object detection unit 141. In the next Step S803, the 3D object recognition unit 142 determines whether or not the number of points included in the localized speed point cloud acquired in Step S802 is a second constant or more. In a case where the 3D object recognition unit 142 determines that the number of points is less than the second constant (Step S803, "No"), a series of processes according to the flowchart of FIG. 33 is ended, and the processing is shifted to Step S706 of the flowchart of FIG. 32, for example.

On the other hand, in a case where the 3D object recognition unit 142 determines that the number of points is the second constant or more (Step S803, "Yes"), the processing is shifted to Step S804. In Step S804, the 3D object recognition unit 142 executes abnormal event recognition processing on the localized speed point cloud acquired in Step S802, and estimates abnormal event attribute information. The abnormal event recognition processing by the 3D object recognition unit 142 may be executed in the same manner as the abnormal event recognition processing by the 2D object recognition unit 152 described in Step S703.

In the next Step S805, the 3D object recognition unit 142 determines whether or not a certainty factor of a result of the recognition by the abnormal event recognition processing in Step S804 is a certain value or more. In a case where the 3D object recognition unit 142 determines that the certainty factor is less than the certain value (Step S805, "No"), the series of processes according to the flowchart of FIG. 33 is ended, and the processing is shifted to Step S706 of the flowchart of FIG. 32. On the other hand, in a case where the 3D object recognition unit 142 determines that the certainty factor is the certain value or more (Step S805, "Yes"), the processing is shifted to Step S806.

In Step S806, the 3D object recognition unit 142 integrates the 3D region information acquired in Step S800 and the recognition information indicating the result of the abnormal event recognition processing in Step S804. After the process in Step S806, the processing is shifted to Step S706 of the flowchart of FIG. 32.

As described above, the abnormal event occurring in the target range is detected on the basis of the speed point cloud acquired by the measurement of the light detection and ranging unit 11a in the sensor unit 10a and the captured image captured by the camera 12 in the fourth embodiment. Detection of an abnormal event based on a movement of an object itself can be performed without using the speed point cloud. In the fourth embodiment, the speed point cloud is used in addition to the captured image to scan the region where the abnormal event has occurred as the region of interest while narrowing the angle range. Therefore, the generated abnormal event can be analyzed in more detail.

Note that effects described in the present specification are merely examples and are not restrictive of the disclosure herein, and other effects not described herein also can be achieved.

Note that the present technology can also have the following configurations.
(1) A sensing system comprising:
   a light detection and ranging device that outputs a speed image based on speed point cloud information based on a reception signal reflected and received by a subject as information of the subject, the light detection and ranging device using a frequency modulated continuous wave; and
   a solid-state imaging device that outputs a captured image obtained by capturing an image of the subject as information of the subject,
   wherein the light detection and ranging device and the solid-state imaging device are arranged to acquire information from an identical side of the subject.
(2) The sensing system according to the above (1), wherein
   a resolution of the solid-state imaging device is higher than a resolution of the light detection and ranging device.
(3) The sensing system according to the above (1) or (2), comprising
   a plurality of units each including the light detection and ranging device and the solid-state imaging device,
   each of the plurality of units is arranged to acquire information from mutually different sides of the subject.
(4) The sensing system according to any one of the above (1) to (3), wherein
   the light detection and ranging device includes
   a scanning control unit that controls a scan range in which the reception signal is scanned,
   the scanning control unit has
   a first scan mode in which control is performed to scan a first scan range and a second scan mode in which control is performed to scan a second scan range narrower than the first scan range as a scan mode for scanning the scan range.
(5) The sensing system according to the above (4), wherein
   the second scan range is included in the first scan range.
(6) The sensing system according to the above (4) or (5), wherein
   the light detection and ranging device
   acquires the speed point cloud information at a first density using the first scan mode, and acquires the speed point cloud information at a second density higher than the first density using the second scan mode.
(7) The sensing system according to any one of the above (4) to (6), wherein
   the second scan range includes the subject that is moving.
(8) The sensing system according to any one of the above (4) to (7), wherein
   the second scan range includes the subject that is a person moving at a predetermined speed or more.
(9) The sensing system according to any one of the above (4) to (8), wherein
   the scanning control unit
   switches from the first scan mode to the second scan mode based on the captured image captured by the solid-state imaging device.
(10) The sensing system according to the above (9), wherein
   the scanning control unit
   switches from the first scan mode to the second scan mode based on a partial image corresponding to a region where a movement is detected based on the speed point cloud information in the captured image.
(11) The sensing system according to any one of the above (4) to (10), wherein
   the scanning control unit
   scans the first scan range with a first scan pattern using the first scan mode, and scans the second scan range with a second scan pattern using the second scan mode.
(12) The sensing system according to the above (11), wherein
   the second scan pattern has a larger number of scan lines per unit area than the first scan pattern.
(13) The sensing system according to any one of the above (1) to (12), further comprising:
   a recognition unit that recognizes a moving person based on an output of the light detection and ranging device and an output of the solid-state imaging device; and
   a people flow analysis unit that acquires the moving person recognized by the recognition unit in time series and analyzes people flow.
(14) The sensing system according to any one of the above (1) to (12), further comprising:
   a signal processing unit that extracts a partial image including the subject from the captured image based on the speed point cloud information;
   a recognition unit that recognizes an abnormal event included in the partial image; and
   a scanning control unit that controls a scan range in which the reception signal by the light detection and ranging device is scanned,
   wherein the scanning control unit has
   a first scan mode in which control is performed to scan a first scan range and a second scan mode in which control is performed to scan a second scan range narrower than the first scan range as a scan mode for scanning the scan range, and
   switches the scan mode for scanning the reception signal from the first scan mode to the second scan mode for scanning the second scan range corresponding to a region of the partial image in a case where the partial image does not have a sufficient amount of information for the recognition unit to recognize the abnormal event.

### Reference Signs List

1, 1a, 1b, 1c SENSING SYSTEM
3 SPACE
10, 10₁, 10₂, 10a, 10a₁, 10a₂ SENSOR UNIT
11, 11₁, 11₂, 11a LIGHT DETECTION AND RANGING UNIT
12, 12₁, 12₂ CAMERA
13, 13a, 13b, 13c SIGNAL PROCESSING UNIT
30, 31 TARGET RANGE
32, 32_{tgt}, 33 REGION OF INTEREST
40, 47 MOVING OBJECT
41, 42 STATIC OBJECT
43 SHIELDING REGION
50 DISTANCE IMAGE
51 SPEED IMAGE
52 COMPOSITE IMAGE
60 SPEED POINT CLOUD
70 COMPOSITE IMAGE FRAME
100 SCANNING UNIT
101 SCANNING CONTROL UNIT
102 ANGLE DETECTION UNIT
110 TRANSMISSION LIGHT CONTROL UNIT
111 OPTICAL TRANSMITTER
112 OPTICAL RECEIVER
113 RECEPTION SIGNAL PROCESSING UNIT
120 POINT CLOUD GENERATION UNIT
140, 140a POINT CLOUD COMBINING UNIT
141 3D OBJECT DETECTION UNIT
142 3D OBJECT RECOGNITION UNIT
150, 150a IMAGE COMBINING UNIT
151, 151a 2D OBJECT DETECTION UNIT
152, 152a 2D OBJECT RECOGNITION UNIT
160, 160a I/F UNIT
170 LOCAL SCANNING CONTROL UNIT
200, 200a ANGLE RANGE
210 SCAN LINE
231 LOCAL SCANNING REGION
300 PEOPLE FLOW ANALYSIS SYSTEM
320 PEOPLE FLOW ANALYSIS DEVICE
321 PERSON RECOGNITION UNIT
322 PEOPLE FLOW ANALYSIS UNIT
330 PEOPLE FLOW DB
340 INFORMATION PRESENTATION DEVICE
341 MAP
400 ABNORMALITY DETECTION SYSTEM
410 ABNORMALITY ANALYSIS DEVICE
411 ABNORMALITY ANALYSIS UNIT
420 ABNORMAL EVENT DB
430 NOTIFICATION DEVICE

## Claims

1. A sensing system comprising:
a light detection and ranging device that outputs a speed image based on speed point cloud information based on a reception signal reflected and received by a subject as information of the subject, the light detection and ranging device using a frequency modulated continuous wave; and
a solid-state imaging device that outputs a captured image obtained by capturing an image of the subject as information of the subject,
wherein the light detection and ranging device and the solid-state imaging device are arranged to acquire information from an identical side of the subject.

2. The sensing system according to claim 1, wherein
a resolution of the solid-state imaging device is higher than a resolution of the light detection and ranging device.

3. The sensing system according to claim 1, comprising
a plurality of units each including the light detection and ranging device and the solid-state imaging device,
each of the plurality of units is arranged to acquire information from mutually different sides of the subject.

4. The sensing system according to claim 1, wherein
the light detection and ranging device includes
a scanning control unit that controls a scan range in which the reception signal is scanned,
the scanning control unit has
a first scan mode in which control is performed to scan a first scan range and a second scan mode in which control is performed to scan a second scan range narrower than the first scan range as a scan mode for scanning the scan range.

5. The sensing system according to claim 4, wherein
the second scan range is included in the first scan range.

6. The sensing system according to claim 4, wherein
the light detection and ranging device
acquires the speed point cloud information at a first density using the first scan mode, and acquires the speed point cloud information at a second density higher than the first density using the second scan mode.

7. The sensing system according to claim 4, wherein
the second scan range includes the subject that is moving.

8. The sensing system according to claim 4, wherein
the second scan range includes the subject that is a person moving at a predetermined speed or more.

9. The sensing system according to claim 4, wherein
the scanning control unit
switches from the first scan mode to the second scan mode based on the captured image captured by the solid-state imaging device.

10. The sensing system according to claim 9, wherein
the scanning control unit
switches from the first scan mode to the second scan mode based on a partial image corresponding to a region where a movement is detected based on the speed point cloud information in the captured image.

11. The sensing system according to claim 4, wherein
the scanning control unit
scans the first scan range with a first scan pattern using the first scan mode, and scans the second scan range with a second scan pattern using the second scan mode.

12. The sensing system according to claim 11, wherein
the second scan pattern has a larger number of scan lines per unit area than the first scan pattern.

13. The sensing system according to claim 1, further comprising:
a recognition unit that recognizes a moving person based on an output of the light detection and ranging device and an output of the solid-state imaging device; and
a people flow analysis unit that acquires the moving person recognized by the recognition unit in time series and analyzes people flow.

14. The sensing system according to claim 1, further comprising:
a signal processing unit that extracts a partial image including the subject from the captured image based on the speed point cloud information;
a recognition unit that recognizes an abnormal event included in the partial image; and
a scanning control unit that controls a scan range in which the reception signal by the light detection and ranging device is scanned,
wherein the scanning control unit has
a first scan mode in which control is performed to scan a first scan range and a second scan mode in which control is performed to scan a second scan range narrower than the first scan range as a scan mode for scanning the scan range, and
switches the scan mode for scanning the reception signal from the first scan mode to the second scan mode for scanning the second scan range corresponding to a region of the partial image in a case where the partial image does not have a sufficient amount of information for the recognition unit to recognize the abnormal event.
